# EUROPEAN PATENT APPLICATION

(11) **EP 4 644 333 A1**
(43) Date of publication of application: **05.11.2025**
(21) Application number: 25173149.3
(22) Date of filing: 29.04.2025
(51) Int. Cl.: C02F 1/32, C02F 1/50, C02F 1/72

(54) **LIQUID, AIR, AND SURFACE TREATMENT USING HIGH INTENSITY BROAD-SPECTRUM PULSED LIGHT**

(30) Priority: 01.05.2024 US 202418651794
(71) Applicant: Aruna Inovation LLC, Bayonne, New Jersey 07002 (US)
(72) Inventor: CHAUDHURY, Ameet, Bayonne, 07002 (US)
(74) Representative: Kirkpatrick

(57) **Abstract**

Liquid, air, or surface treatment/sterilization/disinfection method and system that includes a reactor having a shell, a liquid inlet and a liquid outlet on the shell, tube(s), and light source(s); and a power supply to power the light source(s) to strobe pulsed light with a predetermined fluence or spectrum to eliminate, reduce, degrade, render inert, or nullify the physical, chemical, organic, inorganic, biological, or microbiological contaminants. The light source(s) is provided in the shell such that an internal space is formed between the shell and the tube(s) such that liquid passes through the internal space in a circular motion between the shell and the tube(s) and between the tube(s) from the liquid inlet to the liquid outlet and a portion of the shell is configured to create turbulence of liquid flow in the circular motion between the shell and the tube(s).

## Description

### CROSS-REFERENCE TO RELATED APPLICATION(S)

This application is a continuation-in-part application claiming benefit to U.S. app. 18/530,570, filed December 6, 2023, which is a continuation application of U.S. app. 16/899,128, which was granted as U.S. Patent No. 11,884,556 on January 30, 2024, which are incorporated herein by reference.

### FIELD OF THE DISCLOSURE

The present disclosure is generally related to treating, purifying, disinfecting, or sterilizing liquid, air, or other mediums or surfaces using high intensity broad-spectrum pulsed light, high intensity pulsed light (HIPL), high intensity broad-spectrum pulsed light (BSPL), or pulsed white light (PWL) at a predetermined or tunable pulse rate, frequency, fluence (radiant exposure), peak power, exposure time, and/or pulse width to eliminate, reduce, degrade, or render inert or nullify physical, chemical, organic, inorganic, or microbiological contaminants. The present disclosure is also related to a smart system that may function an as loT (internet of things) device. IoT is a system of interrelated computing devices, mechanical and digital machines provided with unique identifiers and the ability to transfer data over a network without requiring human-to-human or human-to-computer interaction.

### BACKGROUND

Liquid treatment is a process that improves the quality of liquid to make liquid more acceptable for an intended use, i.e., for human consumption. Liquid treatment removes contaminants and other undesirable components, or reduces the concentration of those contaminants and undesirable components or renders such undesirable or harmful components inert so that the liquid becomes fit for the intended use.

Treatment for potable and non-potable liquid production involves the removal of contaminants from raw liquid to produce liquid that is pure enough for human consumption. The destruction of physical, chemical, organic, inorganic, biological and microbiological contaminants, essential for prior to consumption and/or expulsion / disposal, very commonly involves the use of reactive chemical agents. However, residual chemical agents in such treated liquid may cause illness or even death. In some non-chemical liquid treatment systems, mercury may be used, which may cause environmental damage. In traditional light based liquid treatment systems, the high consumption of energy and high floor space requirement have proven to be less efficient.

Known methods and systems for clearing liquid (e.g., reducing turbid of liquid), e.g., reverse osmosis and membrane systems, consume excessive energy and lack robust reliability because microbiological organisms evolve, requiring tracking of known microbiological organisms as they evolve. As a result, known liquid filtration technologies may not adequately remove most microbiological contaminants. Further, known filtration technologies (e.g., reverse osmosis) waste resources, including energy, money, and even liquid. For example, for every gallon of liquid treated with reverse osmosis, about three-fourths is wasted.

A non-chemical, non-mercury, scalable liquid treatment system and method with low cost and reliable liquid production is desired. Traditional light based sterilization methods are typically large in size and expensive and reserved for very specific use cases.

### SUMMARY

The present disclosure is generally related to treating, purifying, disinfecting, or sterilizing liquid, air, or other mediums or surfaces using high intensity broad-spectrum pulsed light, high intensity pulsed light (HIPL), high intensity broad-spectrum pulsed light (BSPL), or pulsed white light (PWL) at a predetermined or tunable pulse rate, frequency, fluence (radiant exposure/energy flux density), peak power, exposure time, and/or pulse width to eliminate, reduce, degrade, or render inert or nullify physical, chemical, organic, inorganic, biological, or microbiological contaminants. That is, in some embodiments, a scalable liquid, air, or surface treatment system using pulsed light is provided to eliminate, reduce, degrade, or render inert or nullify physical, chemical, organic, inorganic, biological, or microbiological contaminants, for example, at a molecular level.

In one embodiment, a liquid treatment system using high intensity broad-spectrum pulsed light to reduce physical, chemical, organic, inorganic, biological, or microbiological contaminants is provided. The system includes a reactor having a shell, a liquid inlet and a liquid outlet on the shell, one or more tubes, and one or more light sources provided between the liquid inlet and the liquid outlet; an ionized wire wrapped outside each of the one or more light sources of the reactor inside the respective one or more tubes; and at least one power supply or pulse generator to power the one or more light sources to strobe pulsed light with a predetermined fluence to treat the physical, chemical, organic, inorganic, biological, or microbiological contaminants. Each of the one or more light sources is respectively contained within the one or more tubes. The one or more light sources is provided in the shell such that an internal space is formed between the shell and the one or more tubes such that liquid passes through the internal space in a circular motion between the shell and the one or more tubes and between the one or more tubes from the liquid inlet to the liquid outlet, and a portion of the shell that is configured to receive the liquid at the liquid inlet is curved and configured to create turbulence of liquid flow in the circular motion between the shell and the one or more tubes.

In another embodiment, a method of reducing physical, chemical, organic, inorganic, biological, and microbiological contaminants is provided. The method includes powering, by at least one power supply, one or more light sources of a reactor, creating turbulence of liquid flow in a circular motion between the shell and the one or more tubes and between the one or more tubes from the liquid inlet to the liquid outlet, wherein a portion of the shell that is configured to receive the liquid at the liquid inlet is curved and configured to create the turbulence of liquid flow in the circular motion between the shell and the one or more tubes, and controlling, by a controller, the one or more light sources to strobe pulsed light with a predetermined fluence to reduce physical, chemical, organic, inorganic, biological, or microbiological contaminants at a molecular level. The reactor includes a shell, a liquid inlet, a liquid outlet, one or more tubes, an ionized wire wrapped outside each of the one or more light sources of the reactor, and each of the one or more light sources having the wrapped ionized wire is respectively contained within the one or more tubes.

It will be appreciated that the above embodiments are merely illustrative of the technical concept and features of liquid, air, or surface treatment with pulsed light, and these embodiments are to make a person skilled in the art understand the contents of the treatment system and to implement the treatment system without limiting the scope of protection of the treatment system. Any features described in one embodiment may be combined with or incorporated/used into the other embodiment, and vice versa. The equivalent change or modification according to the substance of the treatment system should be covered by the scope of protection of the treatment system.

### BRIEF DESCRIPTION OF THE DRAWINGS

The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another, and vice versa. Furthermore, elements may not be drawn to scale. Non-limiting and non-exhaustive descriptions are described with reference to the following drawings. The components in the figures are not necessarily to scale, emphasis instead being placed upon illustrating principles.

The present disclosure provides a detailed and specific description that refers to the accompanying drawings. The drawings and specific descriptions of the drawings, as well as any specific or alternative embodiments discussed, are intended to be read in conjunction with the entirety of this disclosure. The liquid, air, or surface treatment system may, however, be embodied in many different forms and should not be construed as being limited to the embodiments set forth herein; rather, these embodiments are provided by way of illustration only and so that this disclosure will be thorough, complete and fully convey understanding to those skilled in the art.

References are made to the accompanying drawings that form a part of this disclosure and which illustrate embodiments in which the systems and methods described in this specification may be practiced.
FIGS. 1A, 1B, 1C are structural schematic diagrams of a liquid treatment system viewed at different angles, according to at least one example embodiment described herein.
FIGS. 2A and 2B are structural schematic diagrams of a reactor of a liquid treatment system viewed at different angles, according to at least one example embodiment described herein.
FIG. 2C is a cross sectional view of the reactor of FIGS. 2A and 2B, according to at least one example embodiment described herein.
FIG. 2D is a structural schematic diagram of a wire wrapped outside of a light source, according to at least one example embodiment described herein.
FIGS. 3A, 3B, 3C, 3D, 3E, 3F are structural schematic diagrams of some components of a reactor, according to at least one example embodiment described herein.
FIGS. 4A, 4B, 4C are structural schematic diagrams of some components of a reactor, according to at least another example embodiment described herein.
FIGS. 5A, 5B are structural schematic diagrams of some components of a reactor, according to at least yet another example embodiment described herein.
FIGS. 6A, 6B are structural schematic diagrams of some components of a reactor, according to at least still yet another example embodiment described herein.

### DETAILED DESCRIPTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a", "an" and "the" include plural references unless the context clearly dictates otherwise. Although any systems and methods similar or equivalent to those described herein may be used in the practice or testing of embodiments of the present disclosure, the preferred systems and the preferred methods are now described.

It is understood that the term "at or about" as used herein is within +/- 5% of the designated value.

It will be appreciated that embodiments disclosed herein use high intensity broad-spectrum pulsed light, high intensity pulsed light (HIPL), high intensity broad-spectrum pulsed light (BSPL), or pulsed white light (PWL), etc., and these types of light hereinafter are referred to as "light" or "pulsed light". A broad use case (e.g., liquid, air, and surface sterilization method) with affordability is desired for, e.g., to sterilize high contact surfaces from viruses, bacteria and other harmful substances during pandemic times and/or to degrade chemicals and/or organic, inorganic, biological, or microbiological contaminants.

Embodiments of the present disclosure will be described more fully hereafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Liquid treatment typically includes three treatment levels: primary level, secondary level, and tertiary level. Primary level liquid treatment focuses on removing visible elements unfit for consumption from the liquid. Secondary level liquid treatment focuses on removing sediments unfit for consumption (elements that are granular), typically using chemicals or other processes. Tertiary level liquid treatment removes heavy metals and/or microbiological contaminants like e-coli, streptococcus, or other non-visible elements from liquid using for e.g. reverse osmosis, ultra-filtration, nano-filtration, chlorination, ionization, absorption, etc. Embodiments disclosed and recited herein facilitate low energy consumption, chemical-free, mercury-free (e.g., no mercury in the lamps, non-mercury light), scalable liquid treatment system with pulsed light for reducing or even eliminating one or more of biological contaminants, chemical contaminants, such as pesticides, PFAS (per- and polyfluoroalkyl substances), aromatics, volatile organic compounds, organic contaminants, or the like.

Embodiments disclosed herein eliminate, e.g., degrade, elements in liquid on the scale of microns (e.g., at or under 50 microns) in size. The strobing / flashing of light in the embodiments disclosed herein, in contrast to constant light, cuts consumption of electricity because the light is pulsed periodically at a certain pulse rate with a certain pulse width, e.g., at a wavelength at or between 110 nm and 1100 nm. As a result of the light flashing facilitated by one or more of the embodiments described and recited herein, the structures (e.g., cell membrane, protein structure, deoxyribonucleic acid, chemical bonds, etc.) of the contaminants, e.g., physical, biological, organic, inorganic, microbiological, and/or chemical, are disrupted to such an extent that, in the case of biological contaminants, the biological contaminants are unable to repair themselves and thus are unable to regrow and/or mutate, while the chemical bonds in chemical (or organic, inorganic, physical) contaminants are disrupted, e.g., via oxidation, for example, using reactive OH⁻ radicals and/or from the pulsed light. Pulsed light (e.g., pulsed UV light) has strong germicidal/deactivation/degradation properties due to a photon flux which may target the cell membrane, protein structures, the deoxyribonucleic acid (DNA) structure, chemical bonds, or the like and/or produce OH⁻ radicals, e.g., via a catalyst.

Embodiments disclosed herein may include and/or induce photochemical, photothermal and/or photophysical damage to pathogenic microorganisms, leading to cell death, as follows: Photochemical damage: The UV light portion of the pulsed light damages the DNA of bacteria by forming thymine dimers. Upon dimer formation, bacterial DNA cannot be unzipped for replication, and thus bacteria cannot reproduce. Photothermal damage: Localized heating of bacteria is induced by pulsed light due to the difference in the heating/cooling rate and absorption characteristics of the bacteria and the surrounding matrix. Thus, the bacterial cell acts as a local vaporization center and may lead to membrane destruction and cell wall rupture. Thermal stress leads to rupture of microbial cells especially at higher flux densities (> 0.5 J/cm²). Photophysical damage: Pulsed light is also expected to induce some physical disruption on microbial cellular structures due to the intermittent, high-intensity pulses. Researchers have observed cell wall damage, membrane rupture, cytoplasm damage, etc. in bacterial cells exposed to pulsed light, even when the temperature increase was negligible, suggesting that photophysical effects can play a vital role in microbial inactivation.

Embodiments disclosed herein may induce degradation of chemicals and/or other contaminants, as follows: chemical and organic/inorganic contaminants may require Zero and/or First order of Kinetics for degradation, in addition to the proper amount of photon-flux and circular fluid dynamics, e.g., a swirling motion of the fluid in the reactor, to eliminate shadowing effects to treat the entirety of the fluid. In some embodiments, the principles of Axisymmetric Taylor-Couette Swirl Flow are used in the reactor design, which means the water keeps swirling within the reactor from the time it enters, e.g., a controlled turbulence. In some embodiments, a photocatalyst that initiates and accelerates a chemical reaction upon exposure to the pulsed light may be used that is coated on one or more of the reactor walls, and/or on inner and/or outer surfaces of the tubes containing the one or more light source(s). The photocatalyst may be designed or configured to become active and facilitate reactions to degrade chemicals and/or contaminants, such as pollutants, sterilize surfaces and even split water into hydrogen and oxygen, e.g., to form OH⁻ radicals to degrade the chemicals and/or other contaminants. In some embodiments, the photocatalyst may include titanium dioxide (TiO2), zinc oxide (ZnO), and/or cadmium sulfide (CdS), or the like.

Without wishing to be bound by theory, it is understood that photocatalysts may be primarily used to harness light energy to drive chemical reactions. For example, the photocatalyst may be used in processes like photocatalytic oxidation, in which the photocatalyst may effectively degrade organic compounds, pathogens, and even heavy metals from water, making it safer for consumption and release into natural bodies of water. In some embodiments, photocatalysis with pulsed light and UV may leverage the intense and brief bursts of light, e.g., pulsed light, to be activated to generate reactive species that may rapidly degrade contaminants/chemicals, such as, pollutants, and/or that may effectively kill bacteria and viruses, offering a non-chemical disinfection method. In any of the embodiments as discussed herein, the photocatalyst may be coated on one or more surfaces, such as, an inner surface of the shell of the reactor, an outer surface of the one or more tubes, or an inner surface of the one or more tubes. In some embodiments, the photocatalyst may be coated as a thin film using techniques, such as sol-gel processes, dip-coating, or chemical vapor deposition; coating a quartz tube with a photocatalyst, which may allow for optimal light penetration and distribution, enhancing the photocatalytic reaction, since quartz has high UV transparency, which is essential for activating the photocatalyst; or when coating the inside of a steel container, e.g., stainless steel, considerations include the method of coating to ensure durability and effectiveness under varying conditions, in which the coating may withstand the physical and chemical conditions of the process, including temperature, pH, and the presence of reactive species. As such, at least in view of the thing coating of photocatalyst, the photocatalyst may remain in close contact with the reactants, e.g., contaminants/chemicals, improving the efficiency of the photocatalytic process for applications such as pollutant degradation, water treatment, and air purification.

As such, embodiments disclosed and recited herein are not reliant upon chlorine in contrast to a constant light system that dopes liquid with chlorine to prevent re-growth or mutation or react with chemicals.

Some embodiments disclosed and recited herein use pulsed light at different frequencies (or frequencies ranges) to reduce and/or degrade quantities of, or even eliminate altogether, different contaminants in liquid (flowing through the liquid treatment system) so that the microbiological, biological, physical, organic, inorganic, and/or chemical contaminants, the liquid turbidity, or the like may be reduced/removed in one pulsed light process facilitated by a reactor as disclosed herein.

Embodiments disclosed and recited herein may reduce, degrade, and/or eliminate contaminants. Contaminants may include physical, chemical, biological, microbiological, and/or radiological contaminants. For example, contaminants may include e.g., microbiological contaminants (viruses, bacteria, etc.) such as E-coli, Cryptosporidium, CoV2, etc.; water turbidity; TSS (total suspended solids); PFOA's (perfluorooctanoic acid); TOC (total organic carbon); COD (chemical oxygen demand); BOD (biochemical oxygen demand); contaminants such as hydrocarbons; chemical contaminants - contaminants, such as PFAs (Per-and polyfluoroalkyl substances), munition compounds, such as RDX (Research Department eXplosive) and DNAN (2,4- Dinitroanisole), pharmaceuticals such as CIP (ciprofloxacin) and TTC (tetracycline), and/or pesticides, etc.

That is, a photonic light-based system that uses a broad spectrum, e.g., between at or about 110 nm and at or about 1100 nm, for a liquid treatment system using high intensity broad-spectrum pulsed light to reduce physical, chemical, organic, inorganic, biological, or microbiological contaminants is provided that has one or more of the following benefits:

In some embodiments, the pulsed UV system is not a UVC system, e.g., at 245 nm, but enables zero and/or first order or kinetics within pulsed UV for the light and uses circular fluid dynamics to degrade the contaminant to a level where the liquid is safe for use once it leaves the reactor.

In some embodiments, the reactor may be designed or configured to create a natural rotation of the liquid creating controlled turbulence, which may prevent shadowing and competitive absorption of photon flux in the liquid. In some embodiments, the controlled turbulence may be further provided by providing the light sources at an equidistance from either a center and/or concentrically around a central axis of the reactor. As such, every molecule of the liquid may be treated.

The reactor may be designed for treatment of the liquid even if the liquid is turbid, and due to the circular motion (with no crevices), it prevents collection and or deposit of particles present in the liquid, whereas, the UVC system requires non-turbid/clear waters to achieve desired UVT, and hence baffles and sub-chambers are necessary in most cases.

Further embodiments and benefits of the liquid treatment system and method of treatment are discussed further below.

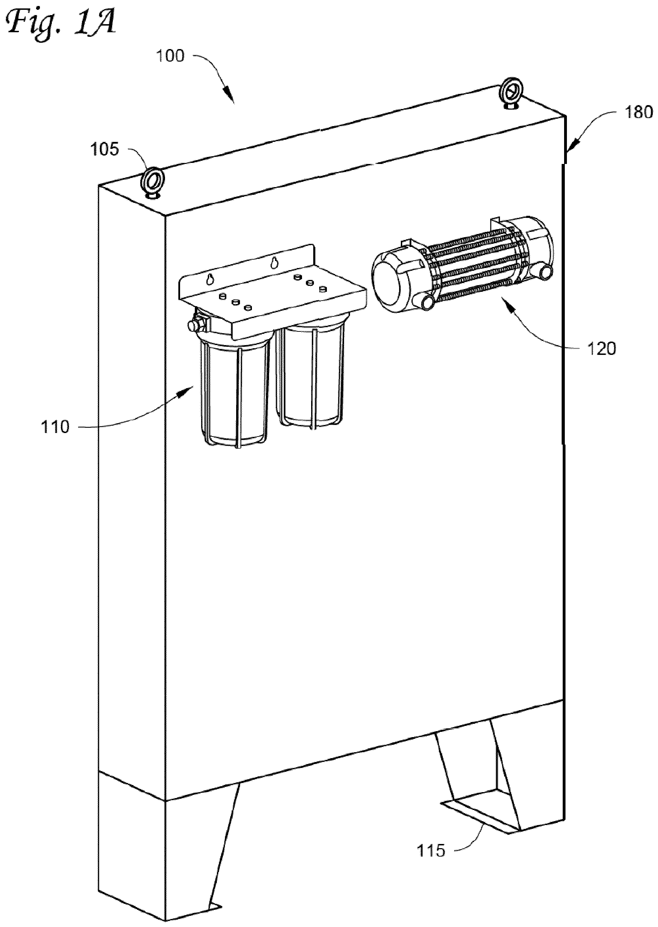

FIGS. 1A-1C are structural schematic diagrams of a liquid treatment system 100 viewed at different angles, according to at least one example embodiment described and recited herein.

The system 100 includes a housing 180, e.g., a sterilization housing or cabinet that houses electrical components of the system 100 and provides a mounting plane for the sterilization components (110, 120) of the system 100 on the reverse/back side of the housing 180. Example embodiments of the system 100 may be installed at a liquid filtration facility, at homes, in buildings, on ships, or next to a liquid source such as a stream, a river, or a lake, as non-limiting example environments.

The housing 180 may be installed outdoors or indoors and affixed (e.g., bolted) to a solid substrate to reduce or even eliminate movement. The housing 180 includes a lifting mechanism, e.g., moving bolt eyes, 105 that allows the system 100 to be mechanically lifted into place. In at least one non-limiting example embodiment, the system 100 has a weight at or about 400 lbs. It will be appreciated that the system 100, including housing 180, may be attached to moving objects and/or made hand-held.

The housing 180 also includes brackets, e.g., bottom bolting brackets, 115 facilitate mounting of the housing 180 onto the solid substrate to prevent movement of the housing 180. It will be appreciated that the housing 180 may be mounted onto the solid substrate using any other suitable mechanism such as clips, etc.

FIG. 1A shows a rear/back side of the housing 180, which includes, at least, a filter sub-system 110. In at least one non-limiting example embodiment, the filter sub-system 110 is a dual filtration (including two filters) system that is capable of receiving and treating liquid.

The system 100 may also include a reactor 120 that is connected to the filter sub-system 110. That is, the system 100 may include liquid pipe(s) to fluidly connect the filter sub-system 110 and the reactor 120. The system also includes connection assemblies having a connecting mechanism and a locking mechanism (such as bolt(s) and nut(s)) to mount the filter sub-system 110 and the reactor 120 on the back of the housing 180. The liquid pipe(s) and the connection assemblies are not shown. In at least one example embodiment, the filter sub-system 110 is optional.

In at least one example embodiment, the filter sub-system 110 is used to perform a first pass treatment of liquid by removing large contaminants from the liquid flow that passes into the system 120. In such embodiment, the sub-system 110 is disposed upstream of the reactor 120 relative to the liquid flow. The filter sub-system 110 may include one filter, two filters, or even no filters within the screw bases of the sub-system 110. In at least another example embodiment, the filter sub-system 110 is disposed downstream of the reactor 120. In at least another example embodiment, the sub-system 110 is disposed downstream of the reactor 120 relative to the liquid flow.

The reactor 120 sterilizes, disinfects and or/treats the liquid flow flowing through the reactor 120. In at least one example embodiment, the reactor 120 provides intense pulsed light to sterilize, disinfect and/or treat approximately 30 gallons of liquid per minute flowing through reactor 120. The embodiments herein are provided as examples only, and therefore other embodiments of reactor 120 are contemplated that are not limited to a volume of 30 gallons per minute.

The system 100 includes a circuit breaker 135. In at least one example embodiment, the circuit breaker 135 is Fuji Electric molded case circuit breaker (e.g., BW250 series) with parameters of 150A, 600 VAC / 250 VDC, 3-pole, thermal magnetic, 30kA SCCR, 250A frame, panel mount, etc. The circuit breaker 135 is the main input and a safety control subsystem of the system 100.

The system 100 also includes power rails 130 to distribute electrical power. In at least one example embodiment, the power rails 130 include three different segmentations, including hot, neutral, and ground, to provide breakout lines into each individual power unit / electrical component of the system 100.

The system 100 further includes outlets 140 that may include, e.g., Quad Din mounted outlets to provide individual duplex controlled outlets for internal control systems (e.g., at or about 120 volts system such as the control system 145) independent to the power supplied (e.g., 170) for the sterilization subsystem (110, 120). That is, the control system has a power supply (and outlets 140) independent of the power supplied to the sterilization subsystem (110, 120) because the sterilization subsystem (110, 120) has specific power supply distribution specifications and outlets for strobing/flashing. In at least one example embodiment, the external power supply (not shown) for the control system and/or the sterilization subsystem (110, 120) is shore power / utility power (e.g., 100-240 volts, etc.).

The system 100 also includes a control system 145. In at least one example embodiment, the control system 145 includes one or more processing boards having a controller 146 / processor (e.g., an ARM processor) running control algorithm to e.g., allow individual digital multiplex (DMX) control of each of the components of the system 100 through, e.g., a control algorithm which may include for e.g., deep learning, machine learning and/or artificial intelligence systems.

The system 100 further includes an input/output device 150 that may be a touch-screen interface screen connected to the controller 146 of the ARM processing boards of the control system 145 to facilitate control (e.g., by a user) of the control system 145. It will be appreciated that access/control to the controller 146 may be remote via, e.g., through a web browser, a mobile app, etc.

The system 100 includes connector(s) (e.g., bolt(s)) 155 fixed on a panel 160 of the housing 180, allowing components inside the housing 180 and disposed on the metal panel 160 of the housing 180 to be removed for either repair or replacement.

The system 100 also includes wire raceways 165 that run wires between different components of the system 100 within the housing 180.

The system 100 further includes a power system 170 that may be an individual flash power system, e.g., at or around 20 ampere current, e.g., with DMX input/output to control each lamps of the reactor 120 by, e.g., the controller 146 of the control system 145. It will be appreciated that the power system 170 may be a flash power system and may include a controller 146 to control each lamps of the reactor 120 on a one-to-one, one-to-multiple or multiple-to-multiple basis. For example, the power system 170 may control one or more lamps to flash individually or together with varying duration, intensity, etc.

In at least one example embodiment, the controller 146 may be used to control the DMX of the power system 170, by e.g., executing a control software. The control can be manual (e.g., via a user command through the input/output device 150), predetermined (e.g., with preset values of the DMX control parameters), or dynamic (adjusted based on current conditions such as available input power, liquid flow rate, etc.). The controller 146 controls the DMX to control or synchronize the power supplied to the lamps of the reactor 120 on a one-to-one, one-to-multiple, or multiple-to-multiple basis. The power/energy supplied to the lamp(s) of the reactor 120 is the amount of intensity (or irradiance, duration, energy density, or dose, etc.) to flash the lamp(s) in the reactor 120. In some embodiments, the DMX is not provided, but rather, the controller 146 controls the respective power supply (or pulse generator).

The system 100 also includes a circuit breaker 175 that may be an Eaton miniature circuit breaker (current-limiting, 20A, Din mountable unit, etc.). The circuit breaker 175 is a secondary shutoff system that allows a single component of the system 100 to fail without causing the entire system 100 to fail, and further allows individual components of the system 100 to be powered down.

The components 130, 135, 140, 145, 150, 155, 160, 165, 170, and 175 of the system 100, described above, may be disposed in the interior of the housing 180. It will be appreciated that the system also includes at least two power supplies (e.g., one to power the control system 145 and one to power the reactor 120), electrical power lines, and control lines to connect those components listed above, including sub-system 110 and reactor 120, to provide power thereto and to provide control by the controller 146. The electrical power lines and the control lines are not shown.

The housing 180 also includes front panel(s) (e.g., door(s)) 190 to cover the housing 180 and an opening/locking mechanism 195 to open/close/lock the panel(s) 190 of the housing 180.

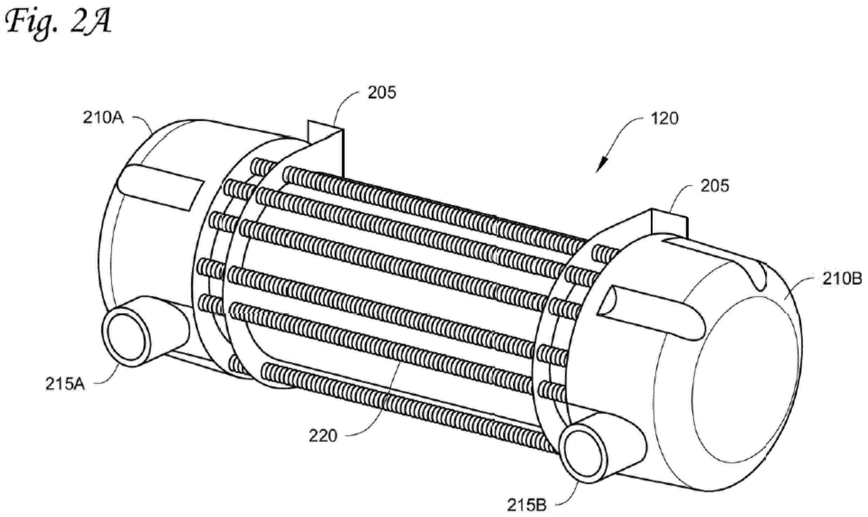

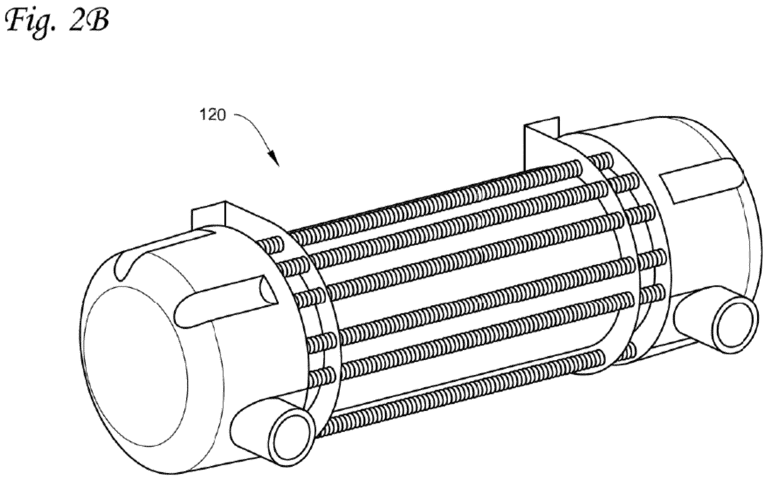

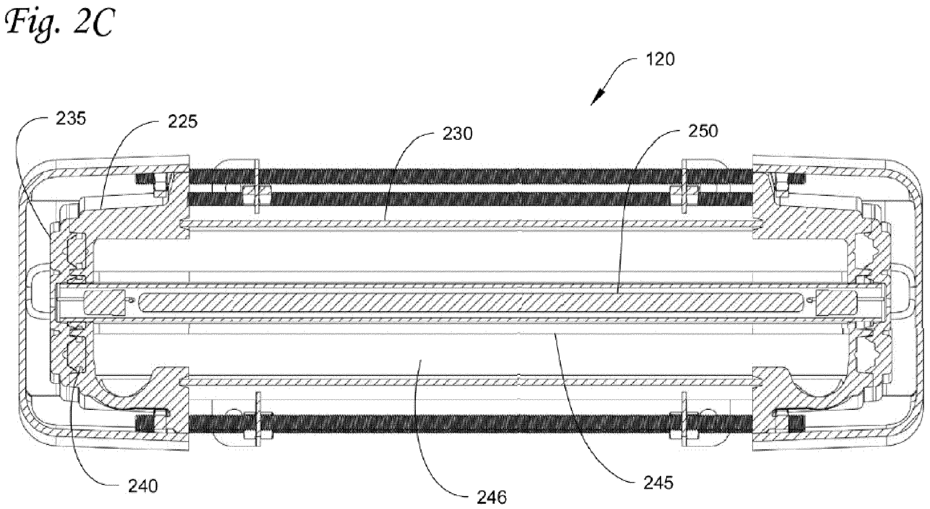

FIGS. 2A and 2B are structural schematic diagrams of a reactor 120 of a liquid treatment system viewed from different angles, according to at least one example embodiment described herein. FIG. 2C is a cross sectional view of the reactor 120 of FIGS. 2A and 2B, according to at least one example embodiment described herein.

The reactor 120 includes a liquid inlet/outlet 215A and a liquid outlet/inlet 215B. In at least one example embodiment, the inlet/outlet 215A, 215B includes a circular port to facilitate the intake and output of liquid to and from the reactor 120. As a non-limiting example, the circular port may have a diameter of % of an inch. It will be appreciated that the system 100 overall may cover all aspects of a smart system (which may include reactor 120) that could function an as loT (internet of things) device.

The reactor 120 also includes two outer caps 210A, 210B. In at least one example embodiment, the outer caps 210A, 210B are made of light (e.g., UV) resistant 4 to safeguard/house an enclosure of the reactor 120, to provide electrical insulation for the enclosure of the reactor 120, and to provide protections to the enclosure of the reactor 120.

The reactor 120 further includes rods 220 that, in at least one example embodiment, may be threaded to allow the components of the reactor 120 to be compressed together at a desired/optimal/predetermined torque. In one example embodiment, the predetermined torque may be at or around 7 foot-pounds. In at least one example embodiment, there are a plurality of rods 220 arranged around a parameter of the enclosure of the reactor 120.

The reactor 120 also includes brackets 205 that facilitate mounting of the reactor 120 to the back of the housing, e.g., the housing 180, for sturdy positioning while in use.

The enclosure of the reactor 120 includes a shell 230. The enclosure of the reactor 120 also includes a compression plate 235 at opposite ends of the reactor 120. In at least one example embodiment, a compression plate 235 is a stainless steel compression plate that compresses rubber gaskets around the outer parts of the quartz tubes 245 to provide a liquid tight seal. An internal space 246 is formed between the shell 230 and the quartz tubes 245 to allow liquid to pass through from inlet (215A, 215B) to outlet (215B, 215A).

The enclosure of the reactor 120 includes an inner cap 225 at opposite ends of the reactor 120. In at least one example embodiment, the inner cap 225 is a stainless steel cap that interlocks into the shell 230. Each inner cap 225 acts as a passive cooling system for the liquid flow, e.g., via liquid swirling and controlled turbulence and/or via design of the reactor to ensure overlap of energy to ensure the liquid absorbs the emitted energy and/or eliminates the shadowing effect. Each cap 225 connects to a liquid inlet or outlet such that liquid enters the reactor 120 turbulently and/or maintains turbulence, e.g., controlled turbulence. The turbulence causes the liquid to stay in the space 246 longer and disturbs the liquid to prevent shadowing, e.g., by creating a swirling of the liquid, such that every molecule of the liquid may be exposed to the broad spectrum light. In at least one example embodiment, the cap 225 has the liquid inlet/outlet (intake/outtake nozzles) built-in to increase turbulence within the space 246. The quartz tube 245 which may be, in at least one embodiment, medical grade piping. It will be appreciated that quartz tube can be resistant to e.g., ultraviolet light. When turbulence is created in the liquid flow, the liquid flow moves so that the chemicals and/or other contaminants, such as, bacteria, cannot hide from the pulsed light. It will be appreciated that there may be a curve or ramp between each cap and a liquid inlet or outlet to cause the liquid turbulence in a circular motion. Liquid turbulence may be created by pushing liquid through a bottom of the reactor 120 and liquid exiting from a top through a liquid pipe. Liquid turbulence may also be created by liquid being pushed through a top of the reactor 120 and exiting from the bottom through a liquid pipe. In one example embodiment, the liquid turbulence liquid flow rate is created at or around 30 gallons per minute.

In at least one example embodiment, there may be one to six or more treatment/sterilization tubes 245 built with corresponding internal flash lamps 250, each individually controllable by the controller 146 and contained within individual quartz tubes 245 that are housed within a compression-held stainless steel enclosure of the reactor 120. The containment quartz tubes 245 provide greater light resistance to "clouding" from the lamps 250.

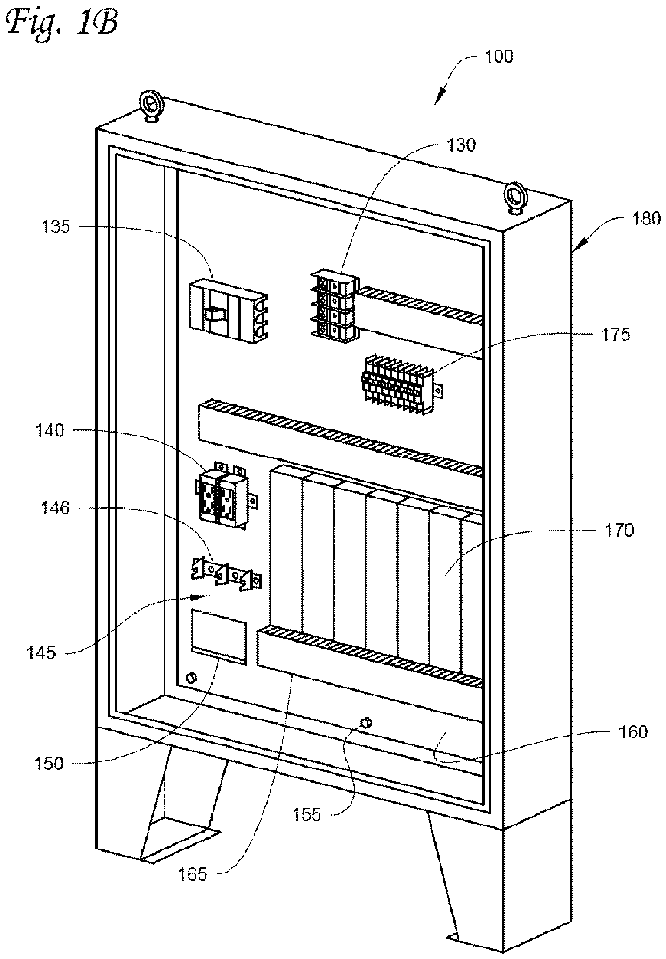

The reactor 120 includes at least one, e.g., one to six, light source 250 that is a replaceable non-mercury (e.g., Xeon UV) flash lamp. The light source 250 is powered by a power supply of the system 100 along with the components (e.g., 130, 135, 165, 170, 175 of FIG. 1B) of the system 100. The controller 146 of the control system (e.g., 145 of FIG. 1B) controls the light source 250 to strobe/flash light at a predetermined pulse rate, a predetermined exposure time, a predetermined frequency (e.g., a predetermined light frequency / spectrum / wavelength), a predetermined peak power/energy, a predetermined fluence, and/or a predetermined pulse width/duration. In at least one example embodiment, the controller 146 controls the light source 250 to strobe/flash light at a predetermined fluence, a predetermined pulse rate, a predetermined pulse width, a predetermined frequency, and a predetermined peak power. In at least one example embodiment, the predetermined pulse rate/frequency of the strobe light ranges from at or around 0 to at or around 100 pulse per second (e.g., six flashes simultaneously over at or about 1.3 seconds) or ranges from at or around 0HZ to at or around 60Hz (or from at or around 5 Hz to at or around 1000 Hz); the predetermined fluence is at or around 10 mJoule/cm2 (or at or around 500 mJoule/cm2) to at or around 5000 Joule/cm2 or higher as needed (over a predetermined exposure time or pulse width which ranges from at or about 0.1 picosecond to at or about 10 seconds such as at or about 1.3 seconds) based on at or around 100 volts or at or around 240 volts voltage; the predetermined light spectrum (e.g., wavelength of the light) is at or around 0.1 nm to 1500 nm; and the predetermined peak power/energy is at or about 10 watts in three milliseconds. It will be appreciated that the exposure time (treatment time) is the time when liquid is in the space 246. In at least one example embodiment, the light source 250 is enveloped in the quartz tubes 245 where the liquid flows through the space 246 outside of the quartz tubes 245. In at least one example embodiment, the controller 146 controls the power supply and/or the light source to turn the power of the light source on and then off, e.g., 5 times/flashes per second, 10 times/flashes per second, 100 times/flashes per second, or once every 1 to 10 seconds, once every three milliseconds etc. It will be appreciated that the power supplied to the electrical components of the system 100 can be alternating current and/or direct current power.

It will be appreciated that by strobing/flashing light at a predetermined pulse rate, fluence, peak power/energy, frequency, and/or pulse width, etc. to a liquid flow, the physical, chemical, organic, inorganic, biological, or microbiological contaminants may be eliminated, reduced, degraded, or rendered inert or nullified. Strobing/flashing light at a predetermined pulse rate, fluence, peak power/energy, frequency, and/or pulse width, etc. also eliminates/eradicates/removes/degrades contaminants from a surface, in air, in other medium, etc. That is, embodiments disclosed herein are applicable to air and/or surface sterilization, disinfection and/or treatment in addition to liquid flow. It will also be appreciated that for air and/or surface sterilization, disinfection and/or treatment, the lamps 250 may serve as the reactor itself (i.e., the enclosure, the shell 230, and/or the tube 245, etc. can be optional) instead of being enclosed in the shell 230 and/or the tube 245.

In some embodiments, the reactor 120 may further include a photocatalyst that initiates and accelerates a chemical reaction upon exposure to the pulsed light may be used that is coated on one or more of the reactor walls, and/or on inner and/or outer surfaces of the tubes containing the one or more light source(s). The photocatalyst may be designed or configured to become active and facilitate reactions to degrade chemicals and/or other contaminants, such as pollutants, sterilize surfaces and even split water into hydrogen and oxygen, e.g., to form OH⁻ radicals to degrade the chemicals and/or other contaminants. In some embodiments, the photocatalyst may include titanium dioxide (TiO2), zinc oxide (ZnO), and/or cadmium sulfide (CdS), or the like.

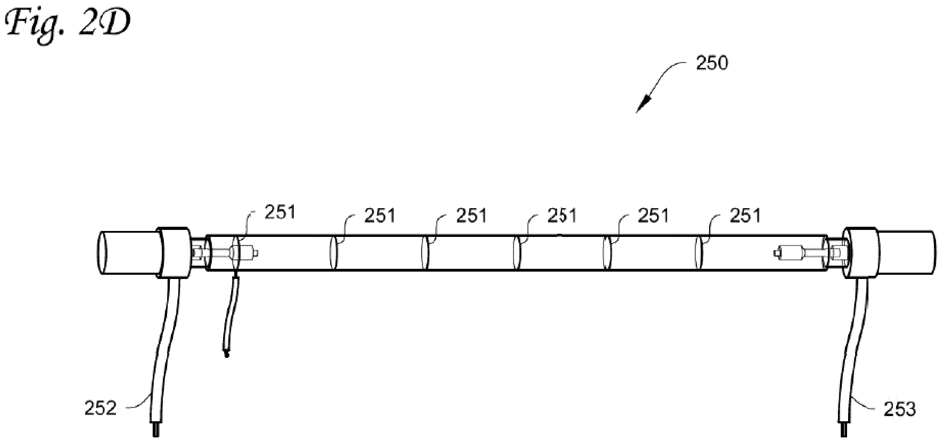

FIG. 2D is a structural schematic diagram of a wire 251 wrapped outside of a light source 250, according to at least one example embodiment described herein. A wire 251 may be disposed between the power system 170 (of Fig. 1B) and each of the light source(s) 250. In at least one example embodiment, the wire 251 may be an ionized/arc wire e.g. a mirror-finished tungsten wire. The ionized wire may be a wire type corona discharge electrode (e.g., made of tungsten) connected to the power system 170. The light source 250 of the reactor 120 may be e.g., a pulsed Xenon lamp. The light source 250 includes power lines 252 and 253 connected to the power system 170. The ionized wire 251 may be wrapped outside of the light source 250 of the reactor 120 (inside the tubes 245 of FIG. 2C), around the light source 250, and extending from one end of the light source 250 to the other end of the light source 250 with a predetermined distance between each wrap. It will be appreciated that the ionized wire 251 may make it easier to ignite the light source 250 (e.g., allowing to use less voltage to ignite the lamp(s) than a configuration without the ionized wire. Without the ionized wire, a lot of large capacitors (e.g., capacitors with large capacitance) or capacitor bank(s) may be required between the power system 170 and the lamp(s) to e.g., lower the resistance. It will be appreciated that with the ionized wire 251, only at or about a 100th or at or about a 1000th of the capacitance/capacitors may be required as compared to capacitance/capacitors required in the configuration without the ionized wire. With the ionized wire 251, the ionized wire may receive a high voltage through the wire 251 making a gap between the electrodes in the lamp easier to ignite and able to ignite with a voltage lower than the voltage required in the configuration without the wire. Without the ionized wire, a high current may be needed to overcome the spark gap than the current required in the configuration with the ionized wire 251.

It will further be appreciated that existing experiments with disinfection products to sterilize, disinfect and/or treat food etc., all create custom power supplies (instead of using utility/shore power) limiting the scalability, flexibility, and making it cost prohibitive.

Referring back to FIG. 2C, the reactor 120 also includes gaskets 240 that may be, e.g., rubber gaskets for expansion/sealing around the shell 230.

The enclosure of the reactor 120 also includes a shell 230 that may be a stainless steel shell to provide passive cooling along with additional reflection of the light provided from the internal lamps 250. In at least one example embodiment, the enclosure of the reactor 120 has a cylinder shape.

It will be appreciated that the components of the reactor 120 with passive cooling capability dissipate heat from the lamp 250. In the liquid treatment system 100, the liquid is a heat sink for the lamp 250 (Xenon lamp typically creates a lot of heat). Liquid flows up for flow regulation and heat sinking, so that there is no need to cool the lamp 250 separately. That is, when the liquid flows through the space 246, there is heat sinking into the liquid.

In at least one example embodiment, the controller 146 controls a switch (e.g., a knob, a switch, a software-based switch, etc.) for Class A, e.g., increased pulse rate, and Class B, e.g., decreased pulse rate, sterilization, disinfection and/or treatment modes may be included/connected to the controller 146. In at least another example embodiment, for a limited power supply, the system may perform variable flashing, for example, the controller 145 may decrease the pulse rate when the volume of liquid flowing through the system/reactor is less than a threshold value, e.g., decreased liquid flow rate, or increase the pulse rate when the volume of liquid flower through the system/reactor is equal to or greater than the threshold value, e.g., increased liquid flow rate.

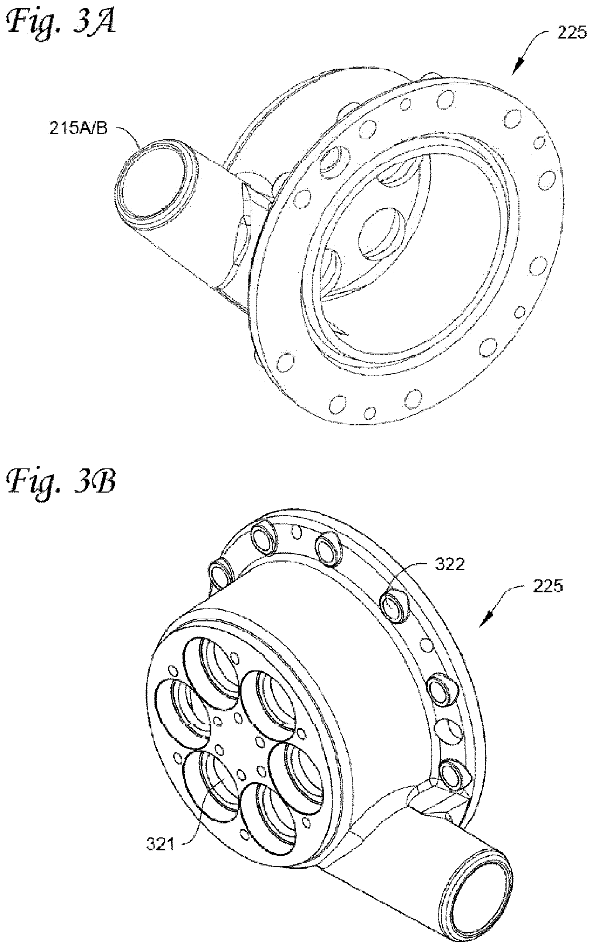

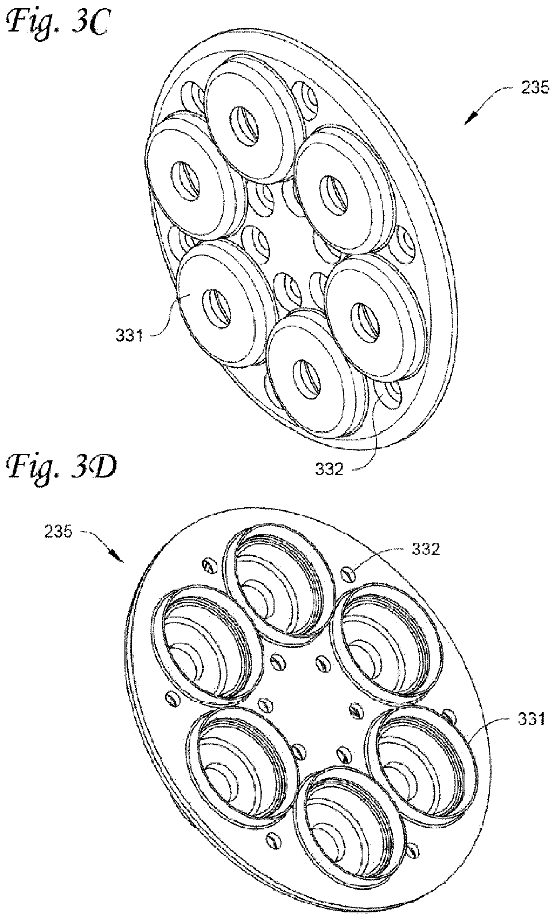

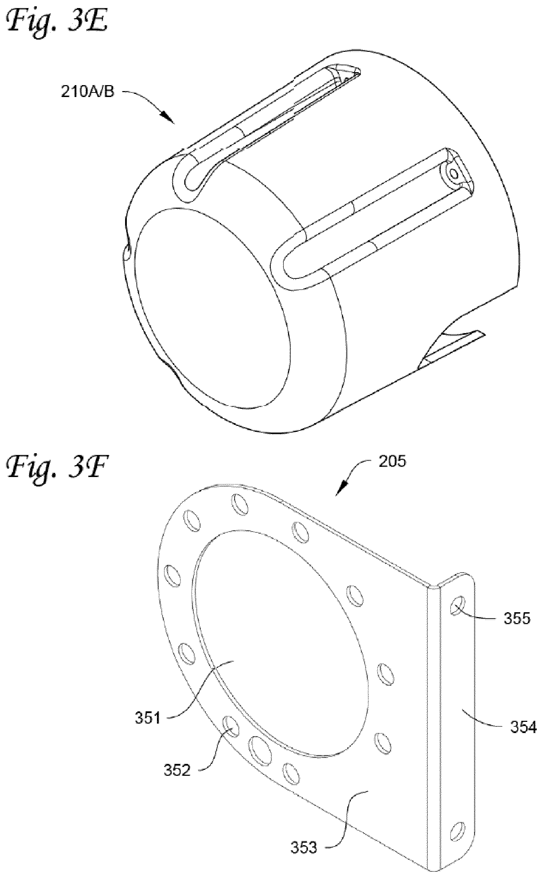

FIGS. 3A-3F are structural schematic diagrams of some components of the reactor 120 of FIGS. 2A-2C, according to at least one example embodiment described herein.

In at least one example embodiment, the component 225 includes openings 322 for connection (e.g., for connecting bolts/pins/rods to pass through) and openings 321 for housing the end(s) of the tubes (e.g., tubes 245 of FIG. 2C).

In at least one example embodiment, the compression plate 235 includes gaskets 331 around the out parts of the quartz tubes. The compression plate 235 also includes at least one opening 332 connection for connecting bolts/pins/rods to pass through.

In at least one example embodiment, the bracket 205 includes openings 352 for connection (e.g., for connecting bolts/pins/rods to pass through), opening 351 for the enclosure of the reactor to pass through, a first plate 353, a second plate 354 having openings 355 so that the bracket 205 is mounted on the back of the housing 180 of FIG. 1A.

It will be appreciated that the designs of FIG. 3A - FIG. 3F may facilitate the quartz tube 245 being easily replaced (e.g., for maintenance purposes) without taking apart the reactor 120. For example, during maintenance, the end cap(s) can be removed and the quartz tube(s) 245 can be replaced.

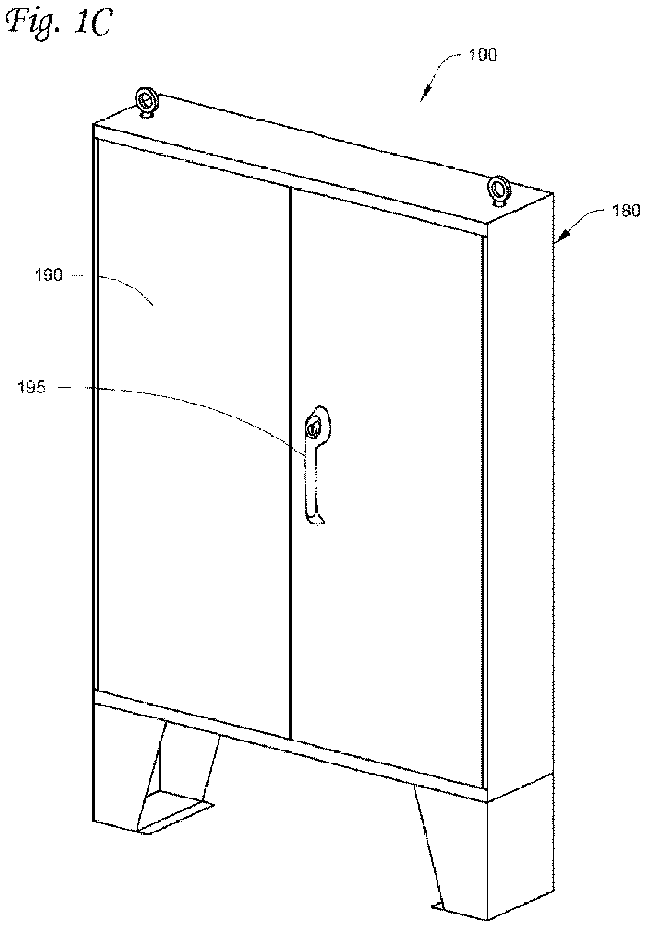

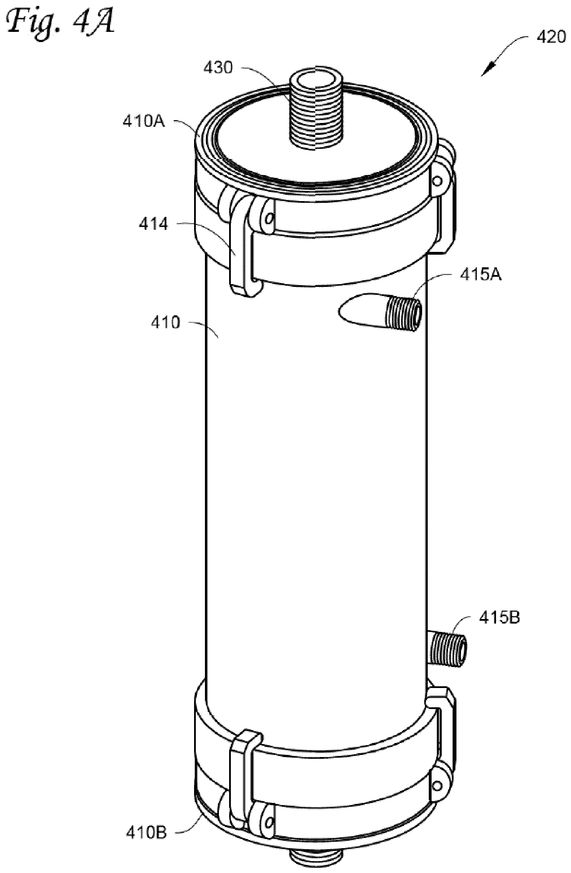

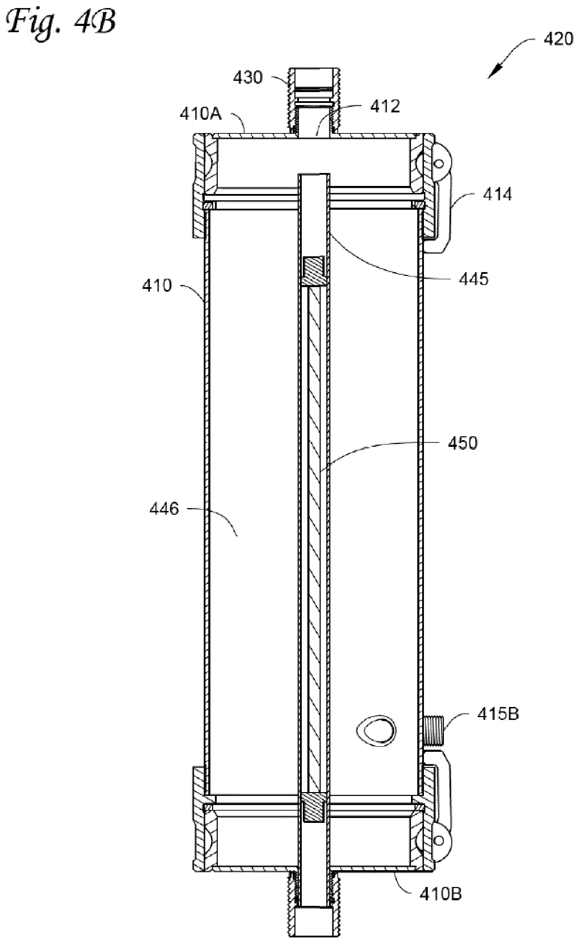

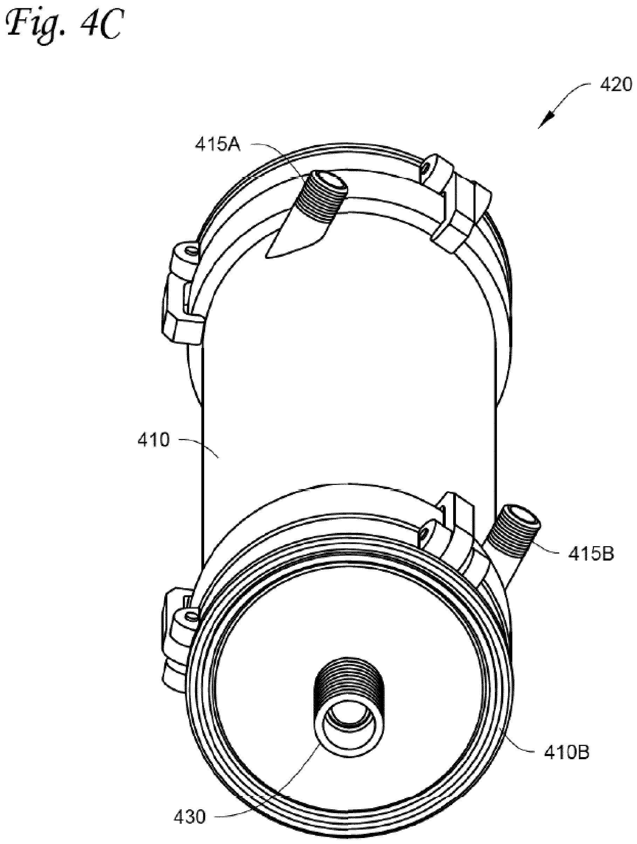

FIGS. 4A, 4B, 4C are structural schematic diagrams of a reactor 420 of a liquid treatment system viewed from different angles and cross-section(s), according to at least one example embodiment described herein, which may have the same or similar features as reactor 120 of FIGS. 1 - 3F, as discussed above. In this embodiment, the reactor 420 may have a simplified design and may be designed or configured for quick assembly and/or disassembly of end cap(s) for access to the light source(s), tube(s), or the like, and/or for cleaning/sanitization of the reactor 420.

The reactor 420 includes a shell 410, a liquid inlet/outlet 415A and a liquid outlet/inlet 415B, one or more tubes 445, and one or more light sources 450. In some embodiments, the reactor 420 may further include one or more end caps 410A, 410B for enclosing ends of the shell 410.

The shell 410 forms an enclosure for the reactor 420 for housing the one or more tubes 445 and one or more light sources 450. In at least one example embodiment, the enclosure of the reactor 420 has a cylinder shape. In some embodiments, the shell 410 may include an internal space 446 and a first end and second end that may be open or closed end(s). In some embodiments, the ends of the shell (or component connected to the open end(s) of the shell to enclose the shell) may include a positioning or securing component for securing the one or more tubes 445 inside the shell 410 and for providing electrical connection thereto. The shell 410 may be formed from metals or plastics, for example, stainless steel, light resistant plastics, and/or bronze or copper material that may have disinfection properties for the liquid flow.

The liquid inlet/outlet 415A and liquid outlet/inlet 415B may be formed on or connected to, e.g., screwed, soldered, welded, or the like, the shell 410 such that liquid enters the reactor 420 turbulently and/or maintains turbulence, e.g., controlled turbulence between the liquid inlet/outlet 415A and liquid outlet/inlet 415B. The turbulence causes the liquid to stay in the space 446 longer and disturbs the liquid to prevent shadowing, e.g., by creating a swirling of the liquid, such that every molecule of the liquid may be exposed to the broad spectrum light, e.g., from the light source 450. In at least one example embodiment, the shell 410 has the liquid inlet/outlet (intake/outtake nozzles) built-in to increase turbulence within the space 446. In some embodiments, the shell 410 may be designed or configured to include a curved portion or ramp at or near the liquid inlet/outlet 415A, 415B to cause the liquid to have turbulence in a circular motion. Liquid turbulence may be created by pushing liquid through a bottom of the reactor 420 and liquid exiting from a top through a liquid pipe. Liquid turbulence may also be created by liquid being pushed through a top of the reactor 420 and exiting from the bottom through a liquid pipe. In one example embodiment, the liquid turbulence liquid flow rate is created at or around 30 gallons per minute. In at least one example embodiment, the inlet/outlet 415A, 415B includes a circular port to facilitate the intake and output of liquid to and from the reactor 420. As a non-limiting example, the circular port may have a diameter of % of an inch. In at least some embodiments, the liquid inlet/outlet 415A, 415B may include a threaded connection, push-to-connect connection, twist-to-connect connection, luer connection, or the like to allow for connection/disconnection to a liquid supply for treatment (or discharge for providing treated liquid). It will be appreciated that the system, e.g., 100 of FIG. 1, overall may cover all aspects of a smart system (which may include reactor 420) that could function an as loT (internet of things) device.

In some embodiments, in which the shell 410 includes one or more open ends, the reactor 420 may include one or more end caps 410A, 410B that are designed or otherwise configured to be removably attached to or detached from the shell 410. In at least one example embodiment, the end caps 410A, 410B are made of light (e.g., UV) resistant plastic to safeguard/house the enclosure of the reactor 420, to provide electrical insulation for the enclosure of the reactor 420, and/or metal to provide protections to the enclosure of the reactor 420. Each of the one or more end caps 410A, 410B may include a through hole 412 corresponding to the positioning of the one or more tubes 445 (and one or more light sources 450) in the reactor 420. The through hole 412 may include a threaded wall for receiving an end of the tube 450 and a threaded connection 430 connectable to the through hole 412 for holding and/or securing the tube 450. In some embodiments, the through hole 412 is designed or otherwise configured such that the tube 445 and/or the light source 450 may be removed through the through hole 412 when the threaded connection 430 is removed. The through hole 412 and/or threaded connection 430 may be designed or otherwise configured for electrical connection to the light source 450. As such, it is appreciated that by including the through hole 412 and threaded connection 430, the reactor 420 is designed or otherwise configured for easily replacing the tube 445 and/or light source 450 by removing the threaded connection 430. In some embodiments, the threaded connection 430 may include an O-Ring and/or a snap-ring at an internal position thereof, in which the O-Ring may block the water from leaking out and keep the water inside the internal space 446, and the snap-ring may be used to position and lock the one or more tube(s) 445 in place within the reactor.

In some embodiments, the one or more end caps 410A, 410B may be provided to be removably attached to or detached from the shell 410 by including one or more pivoted hooking portions 414 for locking the end cap to the shell 410 of the reactor 420. The pivoted hooking portions 414 may include one end connected to a pivot and/or a hinged connection provided on the end cap(s) 410A, 410B and the other end having a hook or clamping portion for engaging a corresponding portion on the shell 410, e.g., a ledge or lip formed or provided on the shell 410, to interlock with the shell 410. In some embodiments, the hook or clamping portion and/or the corresponding portion on the shell 410 may be designed or otherwise configured to provide a liquid tight seal by being designed to increase the clamping pressure when the hook or clamping portion of the pivoted hooking portion 414 is engaged with the corresponding portion of the shell 410, e.g., when the hook or clamping portion is pushed to be engaged with the corresponding portion, in which the end cap(s) 410A, 410B abut against the shell 410 and/or the corresponding portion on the shell 410, additional clamping pressure may be applied. In some embodiments, the one or more pivoted hooking portions 414 may include two, three, four, five, or six pivoted hooking portions 414 provided equidistant around the circumference of the end cap. In some embodiments, gaskets or O-rings, or snap-rings may be provided between the one or more tubes 445 and the through hole 412 and/or between the shell 410 (and/or the corresponding portion) and the one or more end caps 410A, 410B to further provide the liquid tight seal, e.g., when compressed during the connecting/attaching of the end cap(s) 410A, 410B to the shell 410.

It is appreciated that while the one or more end caps 410A, 410B being provided to be removably attached to or detached from the shell 410 by having one or more pivoted hooking portions 414 for locking the end cap to the shell 410 of the reactor 420 has been discussed herein, such disclosure is not intended to be limiting. Rather, other structures and/or assemblies may be provided for removably attaching or detaching the one or more end caps 410A, 410B. For example, in some embodiments, the end caps 410A, 410B may be threadedly engaged with the shell 410; provided as a press-fit or twist-fit connection; clamped to the shell 410; and/or fastened to the shell using fasteners, such as, screws, bolts, or the like.

In some embodiments, the end caps 410A, 410B may be designed or otherwise configured to provide passive cooling for the liquid flow, e.g., via liquid swirling and controlled turbulence and/or via design of the reactor to ensure overlap of energy to ensure the liquid absorbs the emitted energy and/or eliminates the shadowing effect and/or provide additional space for the swirling liquid.

In some embodiments, the one or more tubes 445 may be quartz tubes 445, which may be, in at least one embodiment, medical grade piping. It will be appreciated that quartz tube can be resistant to e.g., ultraviolet light. When turbulence is created in the liquid flow, the liquid flow moves so that the chemicals and/or other contaminants, such as, bacteria, are not hidden from the pulsed light. In at least one example embodiment, there may be one to six or more (treatment/sterilization) tubes 445 built with corresponding light sources 450, e.g., internal flash lamps, each individually controllable by the controller, e.g., 146 of FIGS. 1A, 1B, and contained within individual tube(s) 445 that are housed within a compression-held stainless steel enclosure of the reactor 420. The one or more tube(s) 445 provide greater light resistance to "clouding" from the light source(s) 450.

The reactor 420 may include at least one, e.g., one to nine, light source(s) 450 that may be a replaceable non-mercury (e.g., Xeon UV) flash lamp. The light source 450 is powered by a power supply of the system, e.g., 100, along with the components (e.g., 130, 135, 165, 170, 175 of FIG. 1B) of the system 100. The controller 146 of the control system (e.g., 145 of FIG. 1B) controls the light source 450 to strobe/flash light at a predetermined pulse rate, a predetermined exposure time, a predetermined frequency (e.g., a predetermined light frequency / spectrum / wavelength), a predetermined peak power/energy, a predetermined fluence, and/or a predetermined pulse width/duration. In at least one example embodiment, the controller 146 controls the light source 450 to strobe/flash light at a predetermined fluence, a predetermined pulse rate, a predetermined pulse width, a predetermined frequency, and/or a predetermined peak power. In at least one example embodiment, the predetermined pulse rate/frequency of the strobe light ranges from at or around 0 to at or around 100 pulse per second (e.g., six flashes simultaneously over at or about 1.3 seconds) or ranges from at or around 0 HZ to at or around 60 Hz (or from at or around 5 Hz to at or around 1000 Hz); the predetermined fluence is at or around 10 mJoule/cm2 (or at or around 500 mJoule/cm2) to at or around 5000 Joule/cm2 or higher as needed (over a predetermined exposure time or pulse width which ranges from at or about 0.1 picosecond to at or about 10 seconds such as at or about 1.3 seconds) based on at or around 100 volts or at or around 240 volts voltage; the predetermined light spectrum (e.g., wavelength of the light) is at or around 0.1 nm to 1500 nm. It will be appreciated that the exposure time (treatment time) is the time when liquid is in the space 446. In at least one example embodiment, the light source 450 is enveloped and/or contained in the tube(s) 445 where the liquid flows through the space 446 outside of the one or more tube(s) 445. In at least one example embodiment, the controller 146 controls the power supply and/or the light source to turn the power of the light source on and then off, e.g., 5 times/flashes per second, 10 times/flashes per second, 100 times/flashes per second, or once every 1 to 10 seconds, once every three milliseconds etc. It will be appreciated that the power supplied to the electrical components of the system 100 can be alternating current and/or direct current power.

It will be appreciated that by strobing/flashing light at a predetermined pulse rate, fluence, peak power/energy, frequency, and/or pulse width, etc. to a liquid flow, the physical, chemical, organic, inorganic, biological, or microbiological contaminants may be eliminated, reduced, degraded, or rendered inert or nullified. Strobing/flashing light at a predetermined pulse rate, fluence, peak power/energy, frequency, and/or pulse width, etc. also eliminates/eradicates/removes/degrades contaminants from a surface, in air, in other medium, etc. That is, embodiments disclosed herein are applicable to air and/or surface sterilization, disinfection and/or treatment in addition to liquid flow.

In some embodiments, the controller 146 may control a switch (e.g., a knob, a switch, a software-based switch, etc.) for Class A, e.g., increased pulse rate, and Class B, e.g., decreased pulse rate, sterilization, disinfection and/or treatment modes may be included/connected to the controller 146. In at least another example embodiment, for a limited power supply, the system may perform variable flashing, for example, the controller 146 may decrease the pulse rate when the volume of liquid flowing through the system/reactor is less than a threshold value, e.g., decreased liquid flow rate, or increase the pulse rate when the volume of liquid flower through the system/reactor is equal to or greater than the threshold value, e.g., increased liquid flow rate.

In some embodiments, the liquid treatment system may include a sensor for sensing energy of the pulsed light. The sensor may be provided within the shell 410 of the reactor 420, such that, the energy of pulsed light may be detected. In some embodiments, the sensor may be provided to measure the power supply to the light source 450. As such, the controller 146 and/or the control system 145 may be designed or otherwise configured to adjust the pulsing of the light source(s) 450 to provide the strobing/flashing light at the predetermined pulse rate, fluence, peak power/energy, frequency, and/or pulse width, etc. to eliminate, reduce, degrade, or render the physical, chemical, organic, inorganic, biological, or microbiological contaminants in the liquid flow.

Referring back to FIG. 4B, in some embodiments, the one or more light sources 450 may include a single light source 450 provided in the shell 410, e.g., at a center axis of the reactor 420 in the shell 410, such that the internal space 446 is formed between the shell 410 and the tube 445 such that the liquid passes through the internal space 446 in a circular motion between the shell and the tube 445 from the liquid inlet/outlet 415A, 415B, e.g., controlled turbulence. In some embodiments, the one or more light sources 450 may include between three and nine, e.g., three, four, five, six, seven, eight or nine, light sources 450 for treating the liquid. When more than one light source 450 is provided for the reactor 420, the light source(s) 450 may be provided in the shell 410, e.g., equidistant from each other, such that the internal space 446 is formed between the shell 410 and the tubes 445 such that the liquid passes through the internal space 446 in a circular motion between the shell and the tubes 445 from the liquid inlet/outlet 415A, 415B, such as being provided concentrically around a center light source, e.g., the light source 450 provided at the center axis of the reactor 420 and the remaining light sources provided circumferentially and equidistant from each other.

In some embodiments, the reactor 420 may further include a photocatalyst that initiates and accelerates a chemical reaction upon exposure to the pulsed light may be used that is coated on one or more of the reactor walls, e.g., inner surface, and/or on inner and/or outer surfaces of the tubes containing the one or more light source(s). The photocatalyst may be designed or configured to become active and facilitate reactions to degrade chemicals and/or other contaminants, such as pollutants, sterilize surfaces and even split water into hydrogen and oxygen, e.g., to form OH⁻ radicals to degrade the chemicals and/or other contaminants. In some embodiments, the photocatalyst may include titanium dioxide (TiO2), zinc oxide (ZnO), and/or cadmium sulfide (CdS), or the like.

It will be appreciated that the reactor 420 and/or the components therein may provide passive cooling capability to dissipate heat from the light source(s) 450, e.g., the lamps. In the liquid treatment system 100, the liquid is a heat sink for the light source(s) 450 (Xenon lamp typically creates a lot of heat). In some embodiments, the liquid may flow upwards for flow regulation and heat sinking, so that there is no need to cool the light source(s) 450 separately. That is, when the liquid flows through the space 446, there is heat sinking into the liquid. In some embodiments, the enclosure of the reactor 420 may include the shell 410 that may be a stainless steel shell to provide passive cooling along with additional reflection of the light provided from the internal light source(s) 450. In some embodiments, the stainless steel shell 410 may have an internal surface thereof electropolished to provide reflection of the pulsed light strobed by the plurality of light sources for further heat sinking the heat generated by the light source(s) 450 to the liquid flowing through the reactor 420.

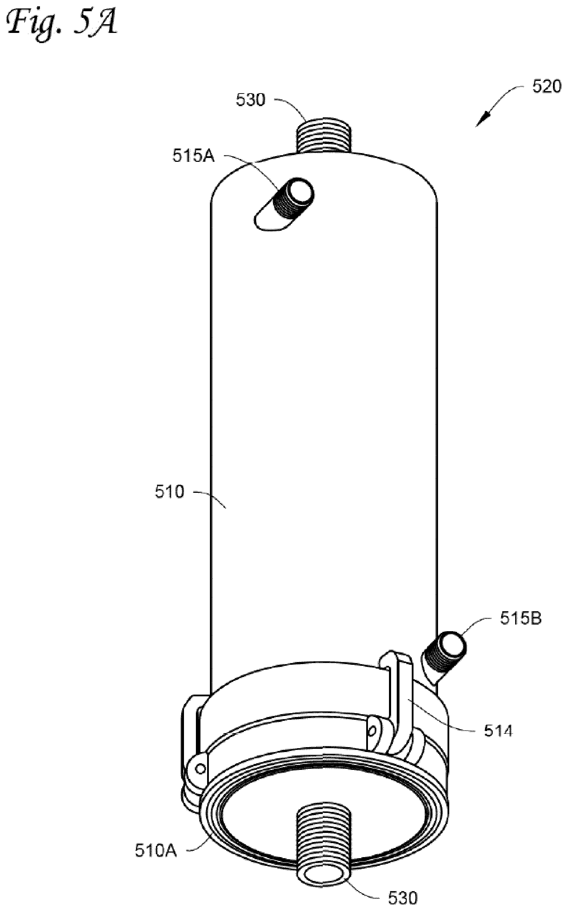

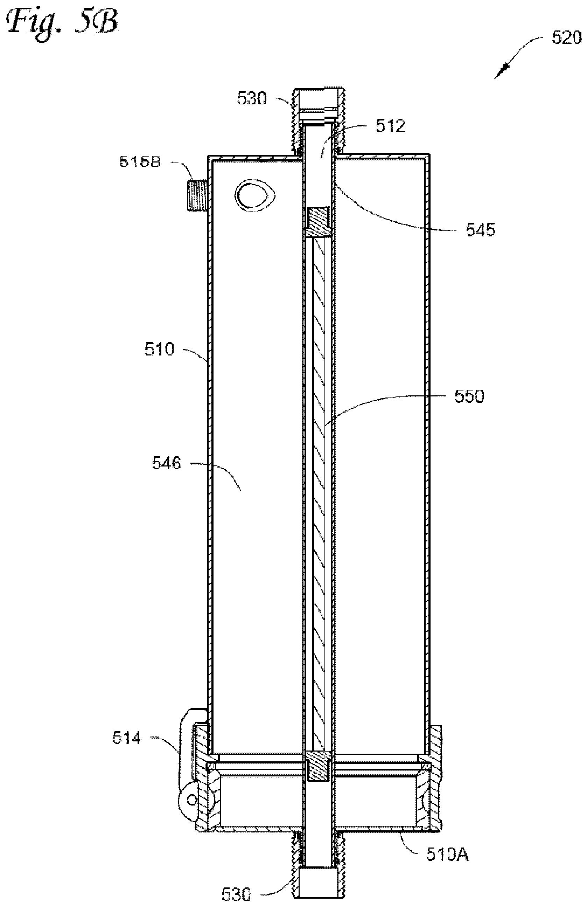

FIGS. 5A, 5B are structural schematic diagrams of a reactor 520 of a liquid treatment system, according to at least one example embodiment described herein, which may have the same or similar features as reactor 120 of FIGS. 1 - 3F or reactor 420 of FIGS. 4A, 4B, 4C, as discussed above. In this embodiment, the reactor 520 may have a further simplified design with respect to the reactor 420 by having only one end cap in which the ends of the reactor may be designed or configured for quick assembly and/or disassembly for access to the light source(s), tube(s), or the like, and/or for cleaning/sanitization of the reactor 520.

The reactor 520 includes a shell 510, a liquid inlet/outlet 515A and a liquid outlet/inlet 515B, one or more tubes 545, and one or more light sources 550. In some embodiments, the reactor 520 may further include one end cap 510A for enclosing one open end of the shell 510.

The shell 510 forms an enclosure for the reactor 520 for housing the one or more tubes 545 and one or more light sources 550. In at least one example embodiment, the enclosure of the reactor 520 has a cylinder shape. In some embodiments, the shell 510 may include an internal space 546 and a first end that may be open end and a second end that may be a closed end, e.g., integrally formed with the shell 510. In some embodiments, the ends of the shell (or component connected to the open end of the shell to enclose the shell) may include a positioning or securing component for securing the one or more tubes 545 inside the shell 510 and for providing electrical connection thereto. The shell 510 may be formed from metals or plastics, for example, stainless steel, light resistant plastics, and/or bronze or copper material that may have disinfection properties for the liquid flow.

The liquid inlet/outlet 515A and liquid outlet/inlet 515B may be formed on or connected to, e.g., screwed, soldered, welded, or the like, the shell 510 such that liquid enters the reactor 520 turbulently and/or maintains turbulence, e.g., controlled turbulence between the liquid inlet/outlet 515A and liquid outlet/inlet 515B. The turbulence causes the liquid to stay in the space 546 longer and disturbs the liquid to prevent shadowing, e.g., by creating a swirling of the liquid, such that every molecule of the liquid may be exposed to the broad spectrum light, e.g., from the light source 550. In at least one example embodiment, the shell 510 has the liquid inlet/outlet (intake/outtake nozzles) built-in to increase turbulence within the space 546. In some embodiments, the shell 510 may be designed or configured to include a curved portion or ramp at or near the liquid inlet/outlet 515A, 515B to cause the liquid to have turbulence in a circular motion. Liquid turbulence may be created by pushing liquid through a bottom of the reactor 520 and liquid exiting from a top through a liquid pipe. Liquid turbulence may also be created by liquid being pushed through a top of the reactor 520 and exiting from the bottom through a liquid pipe. In one example embodiment, the liquid turbulence liquid flow rate is created at or around 30 gallons per minute. In at least one example embodiment, the inlet/outlet 515A, 515B includes a circular port to facilitate the intake and output of liquid to and from the reactor 520. As a non-limiting example, the circular port may have a diameter of % of an inch. In at least some embodiments, the liquid inlet/outlet 515A, 515B may include a threaded connection, push-to-connect connection, twist-to-connect connection, luer connection, or the like to allow for connection/disconnection to a liquid supply for treatment (or discharge for providing treated liquid). It will be appreciated that the system, e.g., 100 of FIG. 1, overall may cover all aspects of a smart system (which may include reactor 520) that could function an as loT (internet of things) device.

As discussed above, the shell 510 includes one open end, in which the reactor 520 may include one end cap 510A that is designed or otherwise configured to be removably attached to or detached from the shell 510 for enclosing the open end. In at least one example embodiment, the end cap 510A is made of light (e.g., UV) resistant plastic to safeguard/house the enclosure of the reactor 520, to provide electrical insulation for the enclosure of the reactor 520, and/or metal to provide protections to the enclosure of the reactor 520.

The one end cap 510A and/or the closed end of the shell 510 may include a through hole 512 corresponding to the positioning of the one or more tubes 545 (and one or more light sources 550) in the reactor 520. The through hole 512 may include a threaded wall for receiving an end of the tube 550 and a threaded connection 530 connectable to the through hole 512 for holding and/or securing the tube 550. In some embodiments, the through hole 512 is designed or otherwise configured such that the tube 545 and/or the light source 550 may be removed through the through hole 512 when the threaded connection 530 is removed. The through hole 512 and/or threaded connection 530 may be designed or otherwise configured for electrical connection to the light source 550. As such, it is appreciated that by including the through hole 512 and threaded connection 530, the reactor 520 is designed or otherwise configured for easily replacing the tube 545 and/or light source 550 by removing the threaded connection 530.

In some embodiments, the one end cap 510A may be provided to be removably attached to or detached from the shell 510 by including one or more pivoted hooking portions 514 for locking the end cap to the shell 510 of the reactor 520. The pivoted hooking portions 514 may include one end connected to a pivot and/or a hinged connection provided on the end cap 510A and the other end having a hook or clamping portion for engaging a corresponding portion on the shell 510, e.g., a ledge or lip formed or provided on the shell 510, to interlock with the shell 510. In some embodiments, the hook or clamping portion and/or the corresponding portion on the shell 510 may be designed or otherwise configured to provide a liquid tight seal by being designed to increase the clamping pressure when the hook or clamping portion of the pivoted hooking portion 514 is engaged with the corresponding portion of the shell 510, e.g., when the hook or clamping portion is pushed to be engaged with the corresponding portion, in which the end cap 510A abuts against the shell 510 and/or the corresponding portion on the shell 510, additional clamping pressure may be applied. In some embodiments, the one or more pivoted hooking portions 514 may include two, three, four, five, or six pivoted hooking portions 514 provided equidistant around the circumference of the end cap. In some embodiments, gaskets or O-rings may be provided between the one or more tubes 545 and the through hole 512 and/or between the shell 510 and the end cap 510A to further provide the liquid tight seal, e.g., when compressed during the connecting/attaching of the end cap 510A to the shell 510.

It is appreciated that while the end cap 510A being provided to be removably attached to or detached from the shell 510 by having one or more pivoted hooking portions 514 for locking the end cap to the shell 510 of the reactor 520 has been discussed herein, such disclosure is not intended to be limiting. Rather, other structures and/or assemblies may be provided for removably attaching or detaching the end caps 510A. For example, in some embodiments, the end cap may be threadedly engaged with the shell 510; provided as a press-fit or twist-fit connection; clamped to the shell 510; and/or fastened to the shell using fasteners, such as, screws, bolts, or the like.

In some embodiments, the end cap 510A may be designed or otherwise configured to provide passive cooling for the liquid flow, e.g., via liquid swirling and controlled turbulence and/or via design of the reactor to ensure overlap of energy to ensure the liquid absorbs the emitted energy and/or eliminates the shadowing effect and/or provide additional space for the swirling liquid.

In some embodiments, the one or more tubes 545 may be quartz tubes 545, which may be, in at least one embodiment, medical grade piping. It will be appreciated that quartz tube can be resistant to e.g., ultraviolet light. When turbulence is created in the liquid flow, the liquid flow moves so that the chemicals and/or other contaminants, such as, bacteria, are not hidden from the pulsed light. In at least one example embodiment, there may be one to six or more (treatment/sterilization) tubes 545 built with corresponding light sources 550, e.g., internal flash lamps, each individually controllable by the controller, e.g., 146 of FIGS. 1A, 1B, and contained within individual tube(s) 545 that are housed within a compression-held stainless steel enclosure of the reactor 520. The one or more tube(s) 545 provide greater light resistance to "clouding" from the light source(s) 550.

The reactor 520 may include at least one, e.g., one to six, light source(s) 550 that may be a replaceable non-mercury (e.g., Xeon UV) flash lamp. The light source 550 is powered by a power supply of the system, e.g., 100, along with the components (e.g., 130, 135, 165, 170, 175 of FIG. 1B) of the system 100. The controller 146 of the control system (e.g., 145 of FIG. 1B) controls the light source 550 to strobe/flash light at a predetermined pulse rate, a predetermined exposure time, a predetermined frequency (e.g., a predetermined light frequency / spectrum / wavelength), a predetermined peak power/energy, a predetermined fluence, and/or a predetermined pulse width/duration. In at least one example embodiment, the controller 146 controls the light source 550 to strobe/flash light at a predetermined fluence, a predetermined pulse rate, a predetermined pulse width, a predetermined frequency, and/or a predetermined peak power. In at least one example embodiment, the predetermined pulse rate/frequency of the strobe light ranges from at or around 0 to at or around 100 pulse per second (e.g., six flashes simultaneously over at or about 1.3 seconds) or ranges from at or around 0 HZ to at or around 60 Hz (or from at or around 5 Hz to at or around 1000 Hz); the predetermined fluence is at or around 10 mJoule/cm2 (or at or around 500 mJoule/cm2) to at or around 5000 Joule/cm2 or higher as needed (over a predetermined exposure time or pulse width which ranges from at or about 0.1 picosecond to at or about 10 seconds such as at or about 1.3 seconds) based on at or around 100 volts or at or around 240 volts voltage; and the predetermined light spectrum (e.g., wavelength of the light) is at or around 0.1 nm to 1500 nm. It will be appreciated that the exposure time (treatment time) is the time when liquid is in the space 546. In at least one example embodiment, the light source 550 is enveloped and/or contained in the tube(s) 545 where the liquid flows through the space 546 outside of the one or more tube(s) 545. In at least one example embodiment, the controller 146 controls the power supply and/or the light source to turn the power of the light source on and then off, e.g., 5 times/flashes per second, 10 times/flashes per second, 100 times/flashes per second, or once every 1 to 10 seconds, once every three milliseconds etc. It will be appreciated that the power supplied to the electrical components of the system 100 can be alternating current and/or direct current power.

It will be appreciated that by strobing/flashing light at a predetermined pulse rate, fluence, peak power/energy, frequency, and/or pulse width, etc. to a liquid flow, the physical, chemical, organic, inorganic, biological, or microbiological contaminants may be eliminated, reduced, degraded, or rendered inert or nullified. Strobing/flashing light at a predetermined pulse rate, fluence, peak power/energy, frequency, and/or pulse width, etc. also eliminates/eradicates/removes/degrades contaminants from a surface, in air, in other medium, etc. That is, embodiments disclosed herein are applicable to air and/or surface sterilization, disinfection and/or treatment in addition to liquid flow.

In some embodiments, the controller 146 may control a switch (e.g., a knob, a switch, a software-based switch, etc.) for Class A, e.g., increased pulse rate, and Class B, e.g., decreased pulse rate, sterilization, disinfection and/or treatment modes may be included/connected to the controller 146. In at least another example embodiment, for a limited power supply, the system may perform variable flashing, for example, the controller 146 may decrease the pulse rate when the volume of liquid flowing through the system/reactor is less than a threshold value, e.g., decreased liquid flow rate, or increase the pulse rate when the volume of liquid flower through the system/reactor is equal to or greater than the threshold value, e.g., increased liquid flow rate.

In some embodiments, the liquid treatment system may include a sensor for sensing energy of the pulsed light. The sensor may be provided within the shell 510 of the reactor 520, such that, the energy of pulsed light may be detected. In some embodiments, the sensor may be provided to measure the power supply to the light source 550. As such, the controller 146 and/or the control system 145 may be designed or otherwise configured to adjust the pulsing of the light source(s) 550 to provide the strobing/flashing light at the predetermined pulse rate, fluence, peak power/energy, frequency, and/or pulse width, etc. to eliminate, reduce, degrade, or render the physical, chemical, organic, inorganic, biological, or microbiological contaminants in the liquid flow.

Referring back to FIG. 5B, in some embodiments, the one or more light sources 550 may include a single light source 550 provided in the shell 510, e.g., at a center axis of the reactor 520 in the shell 510, such that the internal space 546 is formed between the shell 510 and the tube 545 such that the liquid passes through the internal space 546 in a circular motion between the shell and the tube 545 from the liquid inlet/outlet 515A, 515B, e.g., controlled turbulence. In some embodiments, the one or more light sources 550 may include between three and nine light sources 550 for treating the liquid. When more than one light source 550 is provided for the reactor 520, the light source(s) 550 may be provided in the shell 510, e.g., equidistant from each other, such that the internal space 546 is formed between the shell 510 and the tubes 545 such that the liquid passes through the internal space 546 in a circular motion between the shell and the tubes 545 from the liquid inlet/outlet 515A, 515B, such as, being provided concentrically around a center light source, e.g., the light source 550 provided at the center axis of the reactor 520 and the remaining light sources provided circumferentially and equidistant from each other.

In some embodiments, the reactor 520 may further include a photocatalyst that initiates and accelerates a chemical reaction upon exposure to the pulsed light may be used that is coated on one or more of the reactor walls, e.g., inner surface, and/or on inner and/or outer surfaces of the tubes containing the one or more light source(s). The photocatalyst may be designed or configured to become active and facilitate reactions to degrade chemicals and/or other contaminants, such as pollutants, sterilize surfaces and even split water into hydrogen and oxygen, e.g., to form OH⁻ radicals to degrade the chemicals and/or other contaminants. In some embodiments, the photocatalyst may include titanium dioxide (TiO2), zinc oxide (ZnO), and/or cadmium sulfide (CdS), or the like.

It will be appreciated that the reactor 520 and/or the components therein may provide passive cooling capability to dissipate heat from the light source(s) 550, e.g., the lamps. In the liquid treatment system 100, the liquid is a heat sink for the light source(s) 550 (Xenon lamp typically creates a lot of heat). In some embodiments, the liquid may flow upwards for flow regulation and heat sinking, so that there is no need to cool the light source(s) 550 separately. That is, when the liquid flows through the space 546, there is heat sinking into the liquid. In some embodiments, the enclosure of the reactor 520 may include the shell 510 that may be a stainless steel shell to provide passive cooling along with additional reflection of the light provided from the internal light source(s) 550. In some embodiments, the stainless steel shell 510 may have an internal surface thereof electropolished to provide reflection of the pulsed light strobed by the plurality of light sources for further heat sinking the heat generated by the light source(s) 550 to the liquid flowing through the reactor 520.

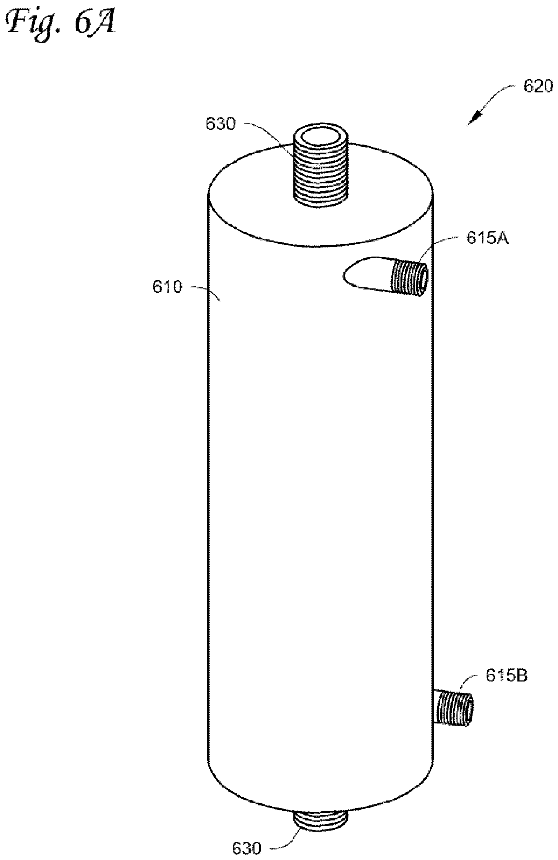

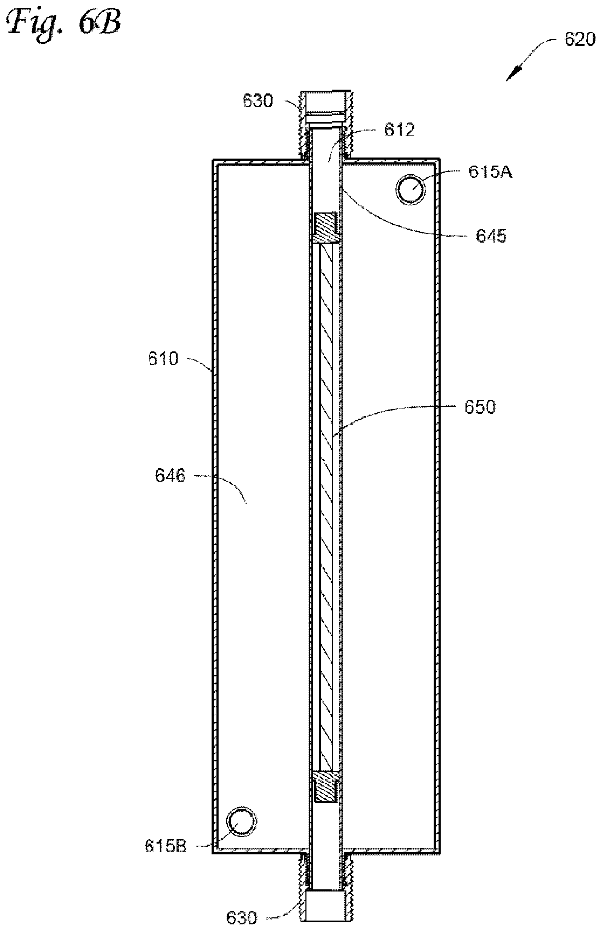

FIGS. 6A, 6B are structural schematic diagrams of a reactor 620 of a liquid treatment system, according to at least one example embodiment described herein, which may have the same or similar features as reactor 120 of FIGS. 1 - 3F or reactor 420 of FIGS. 4A, 4B, 4C or reactor 520 of FIGS. 5A, 5B, as discussed above. In this embodiment, the reactor 620 may have a further simplified design with respect to the reactors 420, 520 by having closed ends that are designed or configured for quick assembly and/or disassembly for access to the light source(s), tube(s), or the like, and/or for cleaning/sanitization of the reactor 620.

The reactor 620 includes a shell 610, a liquid inlet/outlet 615A and a liquid outlet/inlet 615B, one or more tubes 645, and one or more light sources 650.

The shell 610 forms an enclosure for the reactor 620 for housing the one or more tubes 645 and one or more light sources 650. In at least one example embodiment, the enclosure of the reactor 620 has a cylinder shape. In some embodiments, the shell 610 may include an internal space 646 and a first end and a second end that may be closed ends, e.g., ends that are integrally formed with the shell 610. In some embodiments, the ends of the shell (or component connected to the open end of the shell to enclose the shell) may include a positioning or securing component for securing the one or more tubes 645 inside the shell 610 and for providing electrical connection thereto. The shell 610 may be formed from metals or plastics, for example, stainless steel, light resistant plastics, and/or bronze or copper material that may have disinfection properties for the liquid flow.

The liquid inlet/outlet 615A and liquid outlet/inlet 615B may be formed on or connected to, e.g., screwed, soldered, welded, or the like, the shell 610 such that liquid enters the reactor 620 turbulently and/or maintains turbulence, e.g., controlled turbulence between the liquid inlet/outlet 615A and liquid outlet/inlet 615B. The turbulence causes the liquid to stay in the space 646 longer and disturbs the liquid to prevent shadowing, e.g., by creating a swirling of the liquid, such that every molecule of the liquid may be exposed to the broad spectrum light, e.g., from the light source 650. In at least one example embodiment, the shell 610 has the liquid inlet/outlet (intake/outtake nozzles) built-in to increase turbulence within the space 646. In some embodiments, the shell 610 may be designed or configured to include a curved portion or ramp at or near the liquid inlet/outlet 615A, 615B to cause the liquid to have turbulence in a circular motion. Liquid turbulence may be created by pushing liquid through a bottom of the reactor 620 and liquid exiting from a top through a liquid pipe. Liquid turbulence may also be created by liquid being pushed through a top of the reactor 620 and exiting from the bottom through a liquid pipe. In one example embodiment, the liquid turbulence liquid flow rate is created at or around 30 gallons per minute. In at least one example embodiment, the inlet/outlet 615A, 615B includes a circular port to facilitate the intake and output of liquid to and from the reactor 620. As a non-limiting example, the circular port may have a diameter of % of an inch. In at least some embodiments, the liquid inlet/outlet 615A, 615B may include a threaded connection, push-to-connect connection, twist-to-connect connection, luer connection, or the like to allow for connection/disconnection to a liquid supply for treatment (or discharge for providing treated liquid). It will be appreciated that the system, e.g., 100 of FIG. 1, overall may cover all aspects of a smart system (which may include reactor 620) that could function an as loT (internet of things) device.

The closed ends of the shell 610 may include a through hole 612 corresponding to the positioning of the one or more tubes 645 (and one or more light sources 650) in the reactor 620. The through hole 612 may include a threaded wall for receiving an end of the tube 650 and a threaded connection 630 connectable to the through hole 612 for holding and/or securing the tube 650. In some embodiments, the through hole 612 is designed or otherwise configured such that the tube 645 and/or the light source 650 may be removed through the through hole 612 when the threaded connection 630 is removed. The through hole 612 and/or threaded connection 630 may be designed or otherwise configured for electrical connection to the light source 650. As such, it is appreciated that by including the through hole 612 and threaded connection 630, the reactor 620 is designed or otherwise configured for easily replacing the tube 645 and/or light source 650 by removing the threaded connection 630.

In some embodiments, the one or more tubes 645 may be quartz tubes 645, which may be, in at least one embodiment, medical grade piping. It will be appreciated that quartz tube can be resistant to e.g., ultraviolet light. When turbulence is created in the liquid flow, the liquid flow moves so that the chemicals and/or other contaminants, such as, bacteria, are not hidden from the pulsed light. In at least one example embodiment, there may be one to six or more (treatment/sterilization) tubes 645 built with corresponding light sources 650, e.g., internal flash lamps, each individually controllable by the controller, e.g., 146 of FIGS. 1A, 1B, and contained within individual tube(s) 645 that are housed within a compression-held stainless steel enclosure of the reactor 620. The one or more tube(s) 645 provide greater light resistance to "clouding" from the light source(s) 650.

The reactor 620 may include at least one, e.g., one to six, light source(s) 650 that may be a replaceable non-mercury (e.g., Xeon UV) flash lamp. The light source 650 is powered by a power supply of the system, e.g., 100, along with the components (e.g., 130, 135, 165, 170, 175 of FIG. 1B) of the system 100. The controller 146 of the control system (e.g., 145 of FIG. 1B) controls the light source 650 to strobe/flash light at a predetermined pulse rate, a predetermined exposure time, a predetermined frequency (e.g., a predetermined light frequency / spectrum / wavelength), a predetermined peak power/energy, a predetermined fluence, and/or a predetermined pulse width/duration. In at least one example embodiment, the controller 146 controls the light source 650 to strobe/flash light at a predetermined fluence, a predetermined pulse rate, a predetermined pulse width, a predetermined frequency, and/or a predetermined peak power. In at least one example embodiment, the predetermined pulse rate/frequency of the strobe light ranges from at or around 0 to at or around 100 pulse per second (e.g., six flashes simultaneously over at or about 1.3 seconds) or ranges from at or around 0 HZ to at or around 60 Hz (or from at or around 5 Hz to at or around 1000 Hz); the predetermined fluence is at or around 10 mJoule/cm2 (or at or around 500 mJoule/cm2) to at or around 5000 Joule/cm2 or higher as needed (over a predetermined exposure time or pulse width which ranges from at or about 0.1 picosecond to at or about 10 seconds such as at or about 1.3 seconds) based on at or around 100 volts or at or around 240 volts voltage; and the predetermined light spectrum (e.g., wavelength of the light) is at or around 0.1 nm to 1500 nm. It will be appreciated that the exposure time (treatment time) is the time when liquid is in the space 646. In at least one example embodiment, the light source 650 is enveloped and/or contained in the tube(s) 645 where the liquid flows through the space 646 outside of the one or more tube(s) 645. In at least one example embodiment, the controller 146 controls the power supply and/or the light source to turn the power of the light source on and then off, e.g., 5 times/flashes per second, 10 times/flashes per second, 100 times/flashes per second, or once every 1 to 10 seconds, once every three milliseconds etc. It will be appreciated that the power supplied to the electrical components of the system 100 can be alternating current and/or direct current power.

It will be appreciated that by strobing/flashing light at a predetermined pulse rate, fluence, peak power/energy, frequency, and/or pulse width, etc. to a liquid flow, the physical, chemical, organic, inorganic, biological, or microbiological contaminants may be eliminated, reduced, degraded, or rendered inert or nullified. Strobing/flashing light at a predetermined pulse rate, fluence, peak power/energy, frequency, and/or pulse width, etc. also eliminates/eradicates/removes/degrades contaminants from a surface, in air, in other medium, etc. That is, embodiments disclosed herein are applicable to air and/or surface sterilization, disinfection and/or treatment in addition to liquid flow.

In some embodiments, the controller 146 may control a switch (e.g., a knob, a switch, a software-based switch, etc.) for Class A, e.g., increased pulse rate, and Class B, e.g., decreased pulse rate, sterilization, disinfection and/or treatment modes may be included/connected to the controller 146. In at least another example embodiment, for a limited power supply, the system may perform variable flashing, for example, the controller 146 may decrease the pulse rate when the volume of liquid flowing through the system/reactor is less than a threshold value, e.g., decreased liquid flow rate, or increase the pulse rate when the volume of liquid flower through the system/reactor is equal to or greater than the threshold value, e.g., increased liquid flow rate.

In some embodiments, the liquid treatment system may include a sensor for sensing energy of the pulsed light. The sensor may be provided within the shell 610 of the reactor 620, such that, the energy of pulsed light may be detected. In some embodiments, the sensor may be provided to measure the power supply to the light source 650. As such, the controller 146 and/or the control system 145 may be designed or otherwise configured to adjust the pulsing of the light source(s) 650 to provide the strobing/flashing light at the predetermined pulse rate, fluence, peak power/energy, frequency, and/or pulse width, etc. to eliminate, reduce, degrade, or render the physical, chemical, organic, inorganic, biological, or microbiological contaminants in the liquid flow.

Referring back to FIG. 6B, in some embodiments, the one or more light sources 650 may include a single light source 650 provided in the shell 610, e.g., at a center axis of the reactor 620 in the shell 610, such that the internal space 646 is formed between the shell 610 and the tube 645 such that the liquid passes through the internal space 646 in a circular motion between the shell and the tube 645 from the liquid inlet/outlet 615A, 615B, e.g., controlled turbulence. In some embodiments, the one or more light sources 650 may include between three and nine light sources 650 for treating the liquid. When more than one light source 650 is provided for the reactor 620, the light source(s) 650 may be provided in the shell 610, e.g., equidistant from each other, such that the internal space 646 is formed between the shell 610 and the tubes 645 such that the liquid passes through the internal space 646 in a circular motion between the shell and the tubes 645 from the liquid inlet/outlet 615A, 615B, such as, being provided concentrically around a center light source, e.g., the light source 650 provided at the center axis of the reactor 620 and the remaining light sources provided circumferentially and equidistant from each other.

In some embodiments, the reactor 620 may further include a photocatalyst that initiates and accelerates a chemical reaction upon exposure to the pulsed light may be used that is coated on one or more of the reactor walls, e.g., inner surface, and/or on inner and/or outer surfaces of the tubes containing the one or more light source(s). The photocatalyst may be designed or configured to become active and facilitate reactions to degrade chemicals and/or other contaminants, such as pollutants, sterilize surfaces and even split water into hydrogen and oxygen, e.g., to form OH⁻ radicals to degrade the chemicals and/or other contaminants. In some embodiments, the photocatalyst may include titanium dioxide (TiO2), zinc oxide (ZnO), and/or cadmium sulfide (CdS), or the like.

It will be appreciated that the reactor 620 and/or the components therein may provide passive cooling capability to dissipate heat from the light source(s) 650, e.g., the lamps. In the liquid treatment system 100, the liquid is a heat sink for the light source(s) 650 (Xenon lamp typically creates a lot of heat). In some embodiments, the liquid may flow upwards for flow regulation and heat sinking, so that there is no need to cool the light source(s) 650 separately. That is, when the liquid flows through the space 646, there is heat sinking into the liquid. In some embodiments, the enclosure of the reactor 620 may include the shell 610 that may be a stainless steel shell to provide passive cooling along with additional reflection of the light provided from the internal light source(s) 650. In some embodiments, the stainless steel shell 610 may have an internal surface thereof electropolished to provide reflection of the pulsed light strobed by the plurality of light sources for further heat sinking the heat generated by the light source(s) 650 to the liquid flowing through the reactor 620.

One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

Different features, variations and multiple different embodiments have been shown and described with various details. What has been described in this application at times in terms of specific embodiments is done for illustrative purposes only and without the intent to limit or suggest that what has been conceived is only one particular embodiment or specific embodiments. It is to be understood that this disclosure is not limited to any single specific embodiments or enumerated variations. Many modifications, variations and other embodiments will come to mind of those skilled in the art, and which are intended to be and are in fact covered by both this disclosure. It is indeed intended that the scope of this disclosure should be determined by a proper legal interpretation and construction of the disclosure, including equivalents, as understood by those of skill in the art relying upon the complete disclosure present at the time of filing.

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

### ASPECTS:

It is appreciated that any one of the aspects may be combined with each other.

Aspect 1. A liquid treatment system using high intensity broad-spectrum pulsed light to reduce physical, chemical, organic, inorganic, biological, or microbiological contaminants, the system comprising: a reactor having a shell, a liquid inlet and a liquid outlet on the shell, one or more tubes, and one or more light sources provided between the liquid inlet and the liquid outlet, wherein each of the one or more light sources is respectively contained within the one or more tubes; an ionized wire wrapped outside each of the one or more light sources of the reactor inside the respective one or more tubes; and at least one power supply or pulse generator to power the one or more light sources to strobe pulsed light with a predetermined fluence to treat the physical, chemical, organic, inorganic, biological, or microbiological contaminants, wherein the one or more light sources is provided in the shell such that an internal space is formed between the shell and the one or more tubes such that liquid passes through the internal space in a circular motion between the shell and the one or more tubes and between the one or more tubes from the liquid inlet to the liquid outlet, wherein a portion of the shell that is configured to receive the liquid at the liquid inlet is curved and configured to create turbulence of liquid flow in the circular motion between the shell and the one or more tubes.

Aspect 2. The liquid treatment system of Aspect 1, wherein the one or more light sources includes at least a center light source provided along a center axis of the reactor and a plurality of light sources provided concentrically around the center light source.

Aspect 3. The liquid treatment system of any of Aspects 1-2, further comprising a controller connected to the at least one power supply or pulse generator, wherein the controller is configured to control the at least power supply or pulse generator to power the one or more light sources to strobe the pulsed light with the predetermined fluence to treat the contaminants.

Aspect 4. The liquid treatment system of any of Aspects 1-3, wherein the reactor further comprises: an enclosure, the enclosure having a first end and a second end, and a first end cap for enclosing the first end of the enclosure and a second end cap for enclosing the second end of the enclosure, wherein at least one of the first end cap or the second end cap is configured to be removably attached to or detached from the respective end.

Aspect 5. The liquid treatment system of Aspect 4, wherein at least one of the first end cap or the second end cap includes a through hole and a threaded connection connectable to the through hole for respectively holding an end of the one or more tubes.

Aspect 6. The liquid treatment system of any of Aspects 4-5, wherein the at least one of the first end cap or the second end cap is configured to be removably attached to or detached from the respective end by including one or more pivoted hooking portions for locking the first end cap or the second end cap to the shell of the reactor.

Aspect 7. The liquid treatment system of any of Aspects 4-6, wherein both of the first end cap and the second end cap are configured to be removably attached to or detached from the respective end by including one or more pivoted hooking portions for locking the first end cap and the second end cap to the shell of the reactor.

Aspect 8. The liquid treatment system according to any of Aspects 1-7, wherein the one or more light sources includes a non-mercury flash lamp to generate the pulsed light.

Aspect 9. The liquid treatment system according to any of Aspects 1-8, wherein at least one of an inner surface of the shell of the reactor, an outer surface of the one or more tubes, or an inner surface of the one or more tubes is coated with a photocatalyst.

Aspect 10. The liquid treatment system according to any of Aspects 1-9, wherein the shell is a stainless steel shell to provide passive cooling and is electropolished on an inner surface to provide reflection of the pulsed light strobed by the plurality of light sources.

Aspect 11. The liquid treatment system according to any of Aspects 1-10, wherein the one or more tubes are containment quartz tubes.

Aspect 12. The liquid treatment system according to any of Aspects 1-11, wherein the reactor includes bronze or copper material to disinfect liquid flow.

Aspect 13. The liquid treatment system according to any of Aspects 1-12, wherein the liquid inlet and the liquid outlet are configured to enable liquid flow regulation and heat sinking.

Aspect 14. The liquid treatment system according to Aspect 3, wherein the controller is to increase or decrease the pulse rate based on an increased or decreased liquid flow rate.

Aspect 15. The liquid treatment system according to any of Aspects 1-14, further comprising at least one sensor to sense an energy of the pulsed light.

Aspect 16. The liquid treatment system according to any of Aspects 1-15, further comprising a filter to filter contamination from a liquid flow before the liquid flow enters the liquid inlet.

Aspect 17. The liquid treatment system according to Aspect 3, further comprising: a switch controlled by the controller, wherein the switch is configured to switch between a first configuration and a second configuration, wherein in the first configuration, a pulse rate of the pulsed light is increased and in the second configuration, the pulse rate of the pulsed light is decreased, or wherein the switch is configured to switch is configured to switch between sterilization, disinfection, and treatment modes.

Aspect 18. A method of reducing physical, chemical, organic, inorganic, biological, and microbiological contaminants, the method comprising: powering, by at least one power supply or pulse generator, one or more light sources of a reactor, wherein the reactor includes a shell, a liquid inlet, a liquid outlet, one or more tubes, an ionized wire wrapped outside each of the one or more light sources of the reactor, wherein each of the one or more light sources having the wrapped ionized wire is respectively contained within the one or more tubes; creating turbulence of liquid flow in a circular motion between the shell and the one or more tubes and between the one or more tubes from the liquid inlet to the liquid outlet, wherein a portion of the shell that is configured to receive the liquid at the liquid inlet is curved and configured to create the turbulence of liquid flow in the circular motion between the shell and the one or more tubes, and controlling, by a controller, the one or more light sources to strobe pulsed light with a predetermined fluence to reduce physical, chemical, organic, inorganic, biological, or microbiological contaminants at a molecular level.

Aspect 19. The method of Aspect 18, wherein the one or more light sources include a plurality of light sources provided in the shell, and preferably concentrically around a center axis of the reactor, such that an internal space is formed between the shell and the one or more tubes such that the liquid flow passes through the internal space in the circular motion between the shell and the one or more tubes and between the one or more tubes from the liquid inlet to the liquid outlet.

Aspect 20. The method according to any of Aspects 18-19, further comprising: increasing or decreasing, by the controller, the pulse rate based on an increased or decreased liquid flow rate.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting.

## Claims

1. A liquid treatment system using high intensity broad-spectrum pulsed light to reduce physical, chemical, organic, inorganic, biological, or microbiological contaminants, the system comprising:
a reactor having a shell, a liquid inlet and a liquid outlet on the shell, one or more tubes, and one or more light sources provided between the liquid inlet and the liquid outlet,
wherein each of the one or more light sources is respectively contained within the one or more tubes;
an ionized wire wrapped outside each of the one or more light sources of the reactor inside the respective one or more tubes; and
at least one power supply or pulse generator to power the one or more light sources to strobe pulsed light with a predetermined fluence to treat the physical, chemical, organic, inorganic, biological, or microbiological contaminants,
wherein the one or more light sources is provided in the shell such that an internal space is formed between the shell and the one or more tubes such that liquid passes through the internal space in a circular motion between the shell and the one or more tubes and between the one or more tubes from the liquid inlet to the liquid outlet,
wherein a portion of the shell that is configured to receive the liquid at the liquid inlet is curved and configured to create turbulence of liquid flow in the circular motion between the shell and the one or more tubes.

2. The liquid treatment system of Claim 1, wherein the one or more light sources includes at least a center light source provided along a center axis of the reactor and a plurality of light sources provided concentrically around the center light source.

3. The liquid treatment system of any one of Claims 1-2, further comprising a controller connected to the at least one power supply or pulse generator, wherein the controller is configured to control the at least power supply or pulse generator to power the one or more light sources to strobe the pulsed light with the predetermined fluence to treat the contaminants, and preferably, wherein the controller is to increase or decrease the pulse rate based on an increased or decreased liquid flow rate.

4. The liquid treatment system of any one of Claims 1-3, wherein the reactor further comprises:
an enclosure, the enclosure having a first end and a second end, and
a first end cap for enclosing the first end of the enclosure and a second end cap for enclosing the second end of the enclosure,
wherein at least one of the first end cap or the second end cap is configured to be removably attached to or detached from to the respective end.

5. The liquid treatment system of Claim 4, wherein at least one of the first end cap or the second end cap includes a through hole and a threaded connection connectable to the through hole for respectively holding an end of the one or more tubes, or
wherein the at least one of the first end cap or the second end cap is configured to be removably attached to or detached from the respective end by including one or more pivoted hooking portions for locking the first end cap or the second end cap to the shell of the reactor, or
wherein both of the first end cap and the second end cap are configured to be removably attached to or detached from the respective end by including one or more pivoted hooking portions for locking the first end cap and the second end cap to the shell of the reactor.

6. The liquid treatment system according to any one of Claims 1-5, wherein the one or more light sources includes a non-mercury flash lamp to generate the pulsed light.

7. The liquid treatment system according to any one of Claims 1-6, wherein at least one of an inner surface of the shell of the reactor, an outer surface of the one or more tubes, or an inner surface of the one or more tubes is coated with a photocatalyst.

8. The liquid treatment system according to any one of Claims 1-7, wherein the shell is a stainless steel shell to provide passive cooling and is electropolished on an inner surface to provide reflection of the pulsed light strobed by the plurality of light sources.

9. The liquid treatment system according to any one of Claims 1-8, wherein the one or more tubes are containment quartz tubes.

10. The liquid treatment system according to any one of Claims 1-9, wherein the reactor includes bronze or copper material to disinfect liquid flow.

11. The liquid treatment system according to any one of Claims 1-10, wherein the liquid inlet and the liquid outlet are configured to enable liquid flow regulation and heat sinking.

12. The liquid treatment system according to any one of Claims 1-11, further comprising at least one sensor to sense an energy of the pulsed light.

13. The liquid treatment system according to Claim 3, further comprising:
a switch controlled by the controller, wherein the switch is configured to switch between a first configuration and a second configuration, wherein in the first configuration, a pulse rate of the pulsed light is increased and in the second configuration, the pulse rate of the pulsed light is decreased, or
wherein the switch is configured to switch is configured to switch between sterilization, disinfection, and treatment modes.

14. A method of reducing physical, chemical, organic, inorganic, biological, and microbiological contaminants, the method comprising:
powering, by at least one power supply or pulse generator, one or more light sources of a reactor,
wherein the reactor includes a shell, a liquid inlet, a liquid outlet, one or more tubes, an ionized wire wrapped outside each of the one or more light sources of the reactor,
wherein each of the one or more light sources having the wrapped ionized wire is respectively contained within the one or more tubes;
creating turbulence of liquid flow in a circular motion between the shell and the one or more tubes and between the one or more tubes from the liquid inlet to the liquid outlet, wherein a portion of the shell that is configured to receive the liquid at the liquid inlet is curved and configured to create the turbulence of liquid flow in the circular motion between the shell and the one or more tubes, and
controlling, by a controller, the one or more light sources to strobe pulsed light with a predetermined fluence to reduce physical, chemical, organic, inorganic, biological, or microbiological contaminants at a molecular level.

15. The method of Claim 14, further comprising:
increasing or decreasing, by the controller, the pulse rate based on an increased or decreased liquid flow rate.
